# EUROPÄISCHE PATENTSCHRIFT

(11) **EP 3 919 890 B1**
(45) Veröffentlichungstag und Bekanntmachung des Hinweises auf die Patenterteilung: **13.12.2023**
(21) Anmeldenummer: 20178591.2
(22) Anmeldetag: 05.06.2020
(51) Int. Cl.: G01N 21/17, G01N 21/3504, G01N 29/24

(54) **PHOTOAKUSTISCHE SPEKTROSKOPIE AN GASGEMISCHEN ÜBER ABSTIMMBARES FABRY-PÉROT-INTERFEROMETER**
PHOTOACOUSTIC SPECTROSCOPY OF GAS MIXTURES BY MEANS OF TUNABLE FABRY-PÉROT INTERFEROMETER
SPECTROSCOPIE PHOTOACOUSTIQUE DES MÉLANGES GAZEUX À L'AIDE D'UN INTERFÉROMÈTRE FABRY-PÉROT RÉGLABLE

(43) Veröffentlichungstag der Anmeldung: 08.12.2021
(73) Patentinhaber: Hahn-Schickard-Gesellschaft für angewandte Forschung e.V., 78052 Villingen-Schwenningen (DE); Fraunhofer-Gesellschaft zur Förderung der angewandten Forschung e.V., 80686 München (DE)
(72) Erfinder: Bittner, Achim, 74080 Heilbronn (DE); Dehé, Alfons, 72770 Reutlingen (DE); Schmitt, Katrin, 79215 Biederbach (DE); Weber, Christian, 79822 Titisee-Neustadt (DE); Wöllenstein, Jürgen, 79110 Freiburg (DE)
(74) Vertreter: Hertin und Partner Rechts- und Patentanwälte PartG mbB

(56) Entgegenhaltungen:
- EP-A1- 2 770 319
- EP-A2- 0 709 659
- FR-A1- 2 748 810
- US-B1- 6 344 647

## Beschreibung

Die vorliegende Offenbarung betrifft ein photoakustisches Spektrometer zur Analyse mehrerer Gaskomponenten eines Gasgemisches, umfassend einen Infrarot-Emitter mit einem Mikro-Heizelement, eine mit dem Gasgemisch befüllbare Messzelle und einen Schalldruckdetektor wobei die Messzelle im Strahlengang des Infrarot-Emitters vorliegt, sodass die von dem Infrarot-Emitter emittierbare Infrarotstrahlung Gas in der Messzelle zur Ausbildung von Schalldruckwellen anregen kann, welche mit Hilfe des Schalldruckdetektors messbar sind. Das photoakustische Spektrometer ist dadurch gekennzeichnet, dass der Infrarot-Emitter ein MEMS Fabry-Pérot-Interferometer umfasst, welches auf dem Mikro-Heizelement monolithisch integriert vorliegt und mit welchem eine zeit- und wellenlängenabhängige Modulation der Infrarotstrahlung ermöglicht wird. Weiterhin betrifft die vorliegende Offenbarung ein Verfahren zurAnalyse mehrerer Gaskomponenten mittels eines solchen photoakustischen Spektrometers.

### Hintergrund und Stand der Technik

Die photoakustische Spektroskopie (PAS) erlaubt die Detektion feinster Konzentrationen von Gasen und hat eine Vielzahl von Anwendungen. Beispielhaft ist die Detektion von CO₂, welche in der Forschung und der Klimatechnik eine Rolle spielt. Auch die Konzentration z. B. von Abgasen in der Luft kann so gemessen werden. Ebenso sind militärische Anwendungen relevant, bei denen kleinste Konzentrationen von Giftgas detektiert werden können.

Bei der photoakustischen Spektroskopie wird intensitätsmodulierte Infrarotstrahlung mit Frequenzen im Absorptionsspektrum eines in einem Gas zu detektierenden Moleküls eingesetzt. Ist dieses Molekül im Strahlengang vorhanden, findet eine modulierte Absorption statt, die zu Erwärmungs- und Abkühlungsprozessen führt, deren Zeitskalen die Modulationsfrequenz der Strahlung widerspiegeln. Die Erwärmungs- und Abkühlungsprozesse führen zu Expansionen und Kontraktion des Gases, wodurch Schallwellen mit der Modulationsfrequenz verursacht werden. Diese lassen dann sich durch Schalldetektoren, wie beispielsweise Mikrofone, oder Flusssensoren messen.

Photoakustische Gassensoren bestehen in der Regel aus den Komponenten Emitter, Detektor und Messzelle. Es können auch keine oder mehrere Messzellen vorhanden sein. Die Messzelle wird meistens aus Stahl mesoskopisch als Zylinder ausgeführt, siehe z.B. US 2018 005 9066 A1, wobei dies eine Miniaturisierung in der Regel verhindert.

Als Emitter sind verschiedene Strahlungsquellen mit unterschiedlichen Vor- und Nachteilen bekannt. Es können beispielsweise schmalbandige Laserquellen im Infrarotbereich eingesetzt werden. Diese erlauben die Verwendung hoher Strahlungsintensitäten und können mit Standardkomponenten hochfrequent moduliert werden, z. B. für die photoakustische Spektroskopie. Jedoch sind durch das schmale Spektrum des Lasers nur vom Absorptionsspektrum erfasste Moleküle detektierbar. Ebenso sind Laser relativ teuer. Will man verschiedene Moleküle detektieren, muss eine entsprechende Anzahl von Lasern verwendet werden. Als weitere IR-Lichtquellen sind ebenso IR-LEDs bekannt.

Thermische, breitbandige Emitter sind ebenso bekannt. Diese haben den Vorteil eines breiten Spektrums und oft geringer Kosten. Jedoch ist die Modulationsfrequenz dieser Emitter beschränkt, eine direkte Modulation durch Variation der Stromzufuhr ist aufgrund thermischer Zeitkonstanten langsam und verschlechtert die Lebensdauer des Bauteils erheblich. Eine langsame Modulation hat oft eine Messung mit einem schlechten Signal-zu-Rauschverhältnis aufgrund des Eigenrauschens der Detektionskomponenten zur Folge. Eine externe Modulation durch die Verwendung sich drehender Chopperräder ist schneller, jedoch ist der Aufbau aufwendig und nicht derart kompakt und robust, wie es für viele Anwendungen wünschenswert wäre. Auch sind die Modulationsbandbreiten beschränkt und eine Variation der Rotationsgeschwindigkeit des Choppers ist aufgrund von Trägheiten schwerfällig.

Um aus der breitbandigen thermischen Emission ein schmales Spektrum zur Detektion einer gewünschten Gaskomponente zu selektieren, ist es bekannt optische Filter einzusetzen. Für eine Detektion verschiedenen Gase ist es in diesen Fällen notwendig unterschiedliche Filter einzusetzen, welche auf die jeweiligen Wellenlängen- oder Frequenzbereiche abgestimmt sind. Hierzu eignen sich beispielsweise schmalbandige optische Bandpassfilter. Eine gleichzeitige Detektion verschiedener Gaskomponenten ist mit solchen Ansätzen jedoch nicht möglich.

In der EP 2857 811 B1 und EP 2 770 319 B1 wurde vorgeschlagen eine thermische Lichtquelle teilweise mit einem Fabry-Pérot-Filter zu kombinieren, dessen Transmissionseigenschaften verändert werden kann.

Bei dem in der EP 2 770 319 B1 vorgeschlagenen Gasmessgerät wird zwischen einer Lichtquelle und einer photoakustischen Messzelle zusätzlich zu einem Bandpassfilter die Installation eines Fabry-Pérot-Filter vorgeschlagen. Mittels des Fabry-Pérot-Filter soll die transmittierte Wellenlänge des Lichtstrahles veränderlich einstellbar sein, so dass die photoakustische Messzelle mit Licht veränderlicher Wellenlänge beaufschlagbar ist und unterschiedliche Absorptionsspektren von unterschiedlichen Gasen eines Gasgemisches nacheinander angeregt werden können. Mittels des Fabry-Pérot kann besonders zügig und präzise die Wellenlänge des Anregungslichtes auf die jeweiligen Absorptionsbanden unterschiedlicher Gaskomponenten eingestellt werden.

Um die Intensität des Lichtstrahles zu modulieren wird bevorzugt ein mechanischer Chopper als optischen Pulsformer verwandt. In einer alternativen Ausführungsform wird vorgeschlagen die Kombination eines Fabry-Pérot-Filter mit einem Bandpassfilter auszunutzen, um gleichzeitig einzelne Wellenlängenbereiche zu selektieren und die Intensität zu modulieren. Hierdurch soll ein Verzicht auf einen mechanischen Chopper ermöglicht werden.

Die EP 2 857 811 B1 verfolgt einen ähnlichen Ansatz. Bei dem vorgeschlagenen Spektrometer wird zwischen der Lichtquelle und einer Messzelle, eine Filteranordnung mit mehreren Fabry-Pérot-Filtern platziert, deren Transmissionseigenschaften mittels einer Steuereinheit einzeln regelbar sind. Insbesondere ist ein Abtastschema mit einem schmalbandigen Maximum vorgesehen, wobei die Amplitude des Maximums bei der Abtastfrequenz über mehrere Zyklen moduliert und die Abtastfrequenz systematisch verändert wird, so dass das Spektrum nacheinander bei verschiedenen Frequenzen jeweils mit einer Pulsfolge abgetastet wird. Mit dem vorgeschlagenen Spektrometer soll eine einfache Detektion verschiedener Gaskomponenten ermöglich werden.

Nachteilig an den beschriebenen Spektrometern ist die Verwendung mehrerer separater Komponenten, wodurch sich ein aufinrändigererAufbau, Justage und Störanfälligkeiten ergeben können. Weiterhin wird eine Miniaturisierung erschwert.

Für die Herstellung kompakter, mechanisch-elektronischer Vorrichtungen wird heute auf vielen Anwendungsgebieten auf die Mikrosystemtechnik zurückgegriffen. Die so herstellbaren Mikrosysteme (engl. *microelectromechanical system,* kurz MEMS) sind sehr kompakt (Mikrometerbereich) bei gleichzeitig hervorragender Funktionalität und immer geringeren Herstellungskosten. Beispielsweise werden in der DE 10 2017 206 183 A1 schnelle und kompakte Kammantriebe als MEMS-Aktuatoren beschrieben.

Ein durchstimmbarer, schmalbandiger Bandpassfilter auf Basis eines in Volumenmikromechanik hergestellten, elektrostatisch angetriebenen Fabry-Pérot-Interferometers ist aus der DE 10226305 C1 bekannt.

Mögliche Verwendungen beispielsweise derart mikromechanischer Fabry-Pérot-Interferometer zur weiteren Miniaturisierung von photoakustischen Spektrometern wurden im Stand der Technik nicht umfassend ergründet.

EP 0 709 659 A2 beschreibt ein miniaturisiertes Spektrometer, welches zur Bestimmung von Gaskonzentrationen dient. Dabei sendet eine Strahlungsquelle Infrarotstrahlung über einen externen Spiegel und an einen Detektor, welcher die von einem Gas im Strahlengang transmittierte oder emittierte Strahlung detektiert. Eine Detektion der Infrarotstrahlung erfolgt mittels eines Thermoelementes, eines Bolometers oder einer Photodiode. Ein Fabry-Pérot-Interferometer erlaubt eine wellenlängenabhängige Detektion, wobei diese lateral neben der Strahlungsquelle auf einem Substrat angeordnet vorliegt.

US 6 344 647 B1 offenbart photoakustisches Spektrometer zur Analyse von Gas. Das Spektrometer umfasst einen Stapel mehrerer Wafer, wobei vorzugsweise ein Infrarot-Emitter in einem ersten Wafer gelagert wird und die Resonanzkavität des Fabry-Pörot-Interferometers zwischen einem anderen Paar an Wafern gebildet wird. Bei dem Infrarot-Emitter kann es sich bevorzugt um ein Mikroheizelement handeln, welches in der FR 2 748 810 A1 beschrieben wird. Das Mikroheizelement der FR 2 748 810 A1 umfasst einen Quarzrahmen in dem Filamente aus Metall zwischen Elektrodenpads verlaufen. Durch Anlegen eines Stromes werden die Filamente erhitzt und emittieren Infrarotstrahlung aus. Das Fabry-Pérot-Interferometers erlaubt eine Selektion der emittierten Wellenlänge, wobei zudem Zweck durch eine elektrostatische Ansteuerung der Abstand der Spiegel des Fabry-Pérot-Interferometers reguliert werden kann. Eine parallele Detektion verschiedener Gaskomponenten eines Gasgemisches wird nicht offenbart.

Im Lichte des Standes der Technik besteht mithin ein Bedarf an Verbesserung von photoakustischen Spektrometern, welcher eine Analyse verschiedener Gaskomponenten eines Gasgemisches ermöglicht und sich gleichzeitig durch einen einfachen, kostengünstigen und besonderes kompakten Aufbau auszeichnet.

### Aufgabe der Erfindung

Aufgabe der Erfindung ist es, ein photoakustisches Spektrometer sowie ein Verfahren zur Analyse mehrerer Gaskomponenten eines Gasgemisches ohne die Nachteile des Standes bereitzustellen. Insbesondere war es eine Aufgabe der Erfindung ein photoakustisches Spektrometer, welches eine Analyse verschiedener Gaskomponenten eines Gasgemisches ermöglicht und sich gleichzeitig durch einen einfachen, kostengünstigen und besonderes kompakten Aufbau auszeichnet.

### Zusammenfassung der Erfindung

Gelöst wird die Aufgabe durch die Merkmale der unabhängigen Ansprüche 1 und 13. Vorteilhafte Ausgestaltungen der Erfindung sind in den abhängigen Ansprüchen beschrieben.

In einem Aspekt betrifft die Erfindung gemäß Anspruch 1 ein photoakustisches Spektrometer zur Analyse mehrerer Gaskomponenten eines Gasgemisches.

Durch die zeit- und wellenlängenabhängige Modulation der Infrarotstrahlung mittels des Fabry-Pérot-Interferometers ist es vorteilhaft möglich mehrere Gaskomponenten eines Gasgemisches zeitlich aufgelöst mit nur einem Detektor zu analysieren. Zu diesem Zweck kann bevorzugt die Transmission des MEMS Fabry-Pérot-Interferometer zeit- und/oder wellenlängenselektiv gesteuert werden. Beispielsweise kann das Fabry-Pörot-Interferometer so gesteuert werden, dass zu einem ersten Zeitpunkt eine erste Wellenlänge bzw. ein erster Wellenlängenbereich transmittiert, während zu einem zweiten Zeitpunkt eine zweite Wellenlänge bzw. ein zweiter Wellenlängenbereich transmittiert wird. Hierdurch ist es möglich mittels desselben IR-Emitter zu unterschiedlichen Zeiten unterschiedliche Gaskomponenten eines Gasgemisches zu detektieren. Vorteilhaft wird bei dem erfindungsgemäßen photoakustischen Spektrometer das MEMS Fabry-Pérot-Interferometer nicht als separate Komponente in einen Strahlgang eines IR-Emitters eingebracht. Stattdessen liegt das MEMS Fabry-Pörot-Interferometer zusammen mit einem Mikro-Heizelement monolithisch integriert innerhalb des IR-Emitter vor. Hierzu ist der IR-Emitter mehrlagig aus verschiedenen Substratlagen bzw. Wafern aufgebaut, wobei das MEMS Fabry-Pörot-Interferometer und das Mikro-Heizelement innerhalb verschiedener Substratlagen bzw. Wafern angeordnet vorliegt.

Die Formulierung "monolithisch auf dem Heizelement integriert" meint somit bevorzugt, dass das MEMS Fabry-Pörot-Interferometer oberhalb des Heizelementes (d.h. in Emissionsrichtung) vorliegt und zusammen mit dem Heizelement Bestandteil einer (monolithischen) Komponente - dem IR-Emitter - ist. Unter der Formulierung soll sowohl die Integration beider Elemente innerhalb eines Wafers, was aber nicht beansprucht ist, als auch eine Integration in verschiedenen Wafern, welche durch Bonding zu einem (monolithischen) Wafer-Stack zusammengefügt sind, verstanden werden.

Durch die monolithische Integration wird einerseits stets eine präzise Ausrichtung zwischen MEMS Fabry-Pörot-Interferometer und Mikro-Heizelement gewährleistet, welche eine exakte Wellenlängenselektion mit hohem Wirkungsgrad gewährleistet. Anderseits kann eine besonders robuste Ausführungsform eines IR-Emitters mit geringer Störanfälligkeit und kleinsten Abmaßen bereitgestellt werden. Auch eine Steuerung bzw. Kontaktierung des Mikro-Heizelementes lässt sich so auf engstem Raum darstellen und mit geringem Aufwand ausführen.

Das erfindungsgemäße photoakustische Spektrometer zeichnet sich somit dadurch aus, dass trotz einer Verwendung von lediglich einem Detektor auf einfache Weise eine Analyse verschiedener Gaskomponenten eines Gasgemisches ermöglicht wird, wobei der Aufbau kostengünstig und kompakt Aufbau gehalten werden kann.

Je nach Anwendungsfall lässt sich mittels eines Fabry-Pörot-Interferometers ein gewünschter spektraler Bereich zur Anregung einer Gaskomponente selektieren. Dies eröffnet beispielsweise eine Reihe von Anwendungsmöglichkeiten zur schnellen und präzisen Analyse auch komplexerer 4

Gasgemische. Beispielsweise kann das Spektrometer für eine dezentrale und preisgünstige Brennwertanalyse von Erdgas eingesetzt werden.

Die chemische Zusammensetzung von Erdgasen kann je nach Fundstätte beträchtlich schwanken. Hauptbestandteil des Erdgases ist oftmals Methan. Erdgas kann jedoch auch Anteile an Ethan, Propan Butan, Ethen und Pentanen enthalten. Weitere Nebenbestandteile sind beispielsweise Schwefelwasserstoff, Stickstoff oder auch Kohlenstoffdioxid. Insbesondere die letztgenannten Nebenbestandteile müssen oftmals in der Aufbereitung entfernt werden.

Vorteilhaft lassen sich mittels des erfindungsgemäßen photoakustischen Spektrometer zuverlässig ohne hohen Aufwand dezentral eine Überwachung der verschiedenen Gaskomponenten durchführen. Dies ermöglicht u.a. sowohl eine Optimierung der Aufbereitung des Erdgases, als eine qualitätsgenaue Abrechnung, beispielsweise anhand des tatsächlichen Brennwertes der erworbenen Erdgasmengen.

Neben der vorgenannten beispielhaften Verwendung kann das Spektrometer ebenfalls u.a. für eine präzisere Analyse der Luftqualität, Produktionsgasen oder Schadstoffemission eingesetzt. Die Analyse mehrere Gaskomponenten mit einem kompakten photoakustischen Spektrometer bietet somit auf unterschiedlichsten Gebieten technische und wirtschaftliche Vorteile.

Ein photoakustisches Spektrometer zur Analyse von Gas ist dem Fachmann dabei in seinen Grundzügen bzw. wesentlichen Komponenten bekannt. Ein modulierbarer Emitter erzeugt elektromagnetischer Strahlung im infraroten Wellenlängenbereich und ist dabei bevorzugt so angeordnet und konfiguriert, dass die von dem Infrarot-Emitter emittierte Infrarotstrahlung im Wesentlichen oder zumindest teilweise auf das zu analysierende Gas in der Messzelle trifft.

Erfolgt die modulierte Bestrahlung mit einer Infrarotwellenlänge, welche dem Absorptionsspektrum eines in dem Gasgemisch befindlichen Moleküls einer Gaskomponente entspricht, findet eine modulierte Absorption statt, die zu Erwärmungs- und Abkühlungsprozessen führt, deren Zeitskalen die Modulationsfrequenz der Strahlung widerspiegeln. Gemäß dem photoakustischen Effekt führen die Erwärmungs- und Abkühlungsprozesse zu Expansionen und Kontraktion der Gaskomponente wodurch die Gaskomponente zur Ausbildung von Schalldruckwellen mit im Wesentlichen der Modulationsfrequenz angeregt werden kann. Diese lassen sich durch den Schalldetektor messen. Die Leistung der Schallwellen ist dabei vorzugsweise direkt proportional zur Konzentration der absorbierenden Gaskomponente.

Unter dem Begriff Gaskomponente wird bevorzugt der Anteil chemisch (und spektroskopisch) gleicher Gasmoleküle (z.B. CO₂, Methan, Stickstoff etc.) in einem Gasgemisch verstanden, während das Gasgemisch die Gesamtheit bzw. das Gemisch aus mehrerer (bevorzugt unterschiedlichen) Gaskomponenten meint (z.B. Erdgas, Luft, etc.).

Im Gegensatz zu den im Stand der Technik verbreiteten Verfahren kann durch die Verwendung eines MEMS Fabry-Pérot-Interferometers, welches monolithisch integriert, zusammen mit einem Mikro-Heizelement vorliegt, sowohl die zeitliche Modulation der Intensität zur Ausbildung der Schallwellen, als auch eine Wellenlängenselektion zur Abstimmung auf das Absorptionsspektrum einer jeweiligen Gaskomponente erfolgen.

Bevorzugt kann es hierbei auch zur überlagerten Modulation mittels des Fabry-Pérot-Interferometers und einer elektrischen Ansteuerung des Mikro-Heizelementes kommen. Beispielsweise kann es bevorzugt sein, dass die Intensität der IR-Strahlung, welche vom Heizelement emittiert wird durch Variation einer Stromzufuhr zum Heizelement moduliert wird und zusätzlich eine Modulation der selektierten Wellenlänge mittels des Fabry-Pérot-Interferometers erfolgt. Hierdurch kann flexibel eine zeit- und wellenlängenabhängige Bestrahlung erfolgen, wobei beispielsweise die Messzelle auch eine periodische Bestrahlung mit zwei oder mehr Wellenlängen erfahren kann, welche eine unterschiedliche Periodizität, Amplitude oder Phase aufweisen.

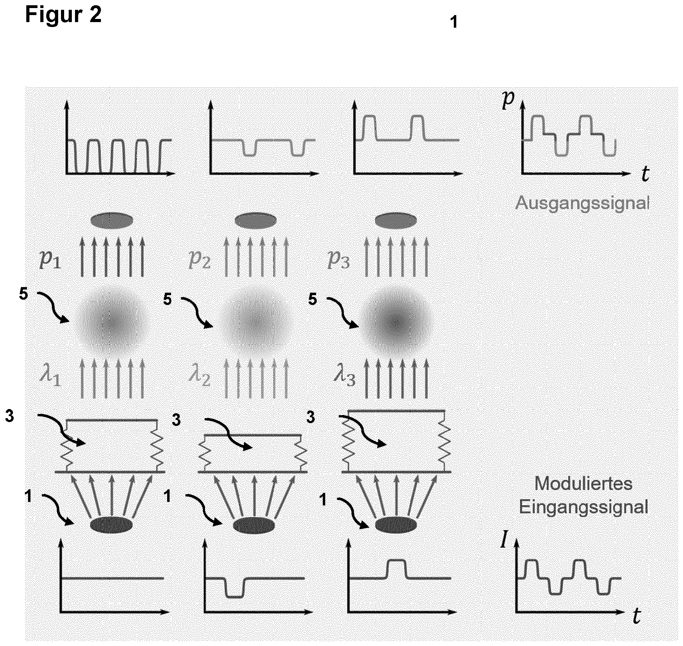

Vorteilhaft ist ebenso eine unmittelbare Modulation der Anregungssignals mittels eines Fabry-Pérot-Interferometers, ohne überlagerte elektrische Ansteuerung des Mikro-Heizelementes möglich. Beispielsweise kann zu diesem Zweck die Strahlung als eine Sprungfunktion ausgeführt werden, bei welcher die Transmissionseigenschaft des Fabry-Pörot-Interferometer in einer Rechteckfunktion zwischen verschiedenen Wellenlängen geführt wird (vgl. Fig. 2). Bei Bestrahlung des Gasgemisches mit einer derart wellenlängen- und zeitabhängig modulierten IR-Strahlung erfolgt vorteilhaft eine modulierte Anregung, welche Rückschlüsse über den Anteil der einzelnen Gaskomponenten erlaubt. So hängen die zeitabhängigen Amplituden der erzeugten akustischen Signale von dem Anteil bzw. der jeweiligen Konzentration der Gaskomponenten ab, welche bei den jeweiligen Wellenlängen (maximal angeregt werden. Durch zeitliche Auflösung der detektierten akustischen Signale mittels eines Schalldetektors (z.B. Mikrofon) kann auf diese Weise eine Multi-Gaskomponenten-Analyse schnell und zuverlässig durchgeführt werden. Durch Verzicht auf eine elektrische Modulation des IR-Emitters werden besonders hohe Modulationsfrequenzen erreicht, sodass eine Vielzahl von Gaskomponenten gleichzeitig überwacht oder analysiert werden kann.

Die Schallwellen können von einem Schalldruckdetektor erfasst werden, welcher beispielsweise als ein Mikrofon, Durchflusssensor oder Schwingungsbalken ausgeführt ist. Bevorzugt erfolgt die Detektion der Schallwellen zeitabhängig, sodass unter Kenntnis der zeitabhängigen spektralen Transmission des Fabry-Pörot-Interferometers auf Basis des detektierten, zeitabhängigen akustischen Signales Rückschlüsse über den Anteil der jeweilig angeregten Gaskomponenten im Gasgemisch gezogen werden können.

Ein modulierbarer Infrarot-Emitter bezeichnet bevorzugt eine Vorrichtung, die elektromagnetische Strahlung aussendet. Diese Strahlung hat bevorzugt einen Wellenlängenbereich im Infrarot (IR) Bereich, insbesondere zwischen ca. 700 Nanometer (nm) und 1 Millimeter (mm) Wellenlänge. Die dementsprechende Frequenz der emittierten Strahlung kann im Bereich zwischen etwa 300 Gigahertz (GHz) bis 400 Terahertz (THz) liegen. Das Spektrum kann ebenso bevorzugt anhand der Wellenzahl m⁻¹ bzw. cm⁻¹ wiedergegeben werden, wie es im Bereich der Spektroskopie üblich ist. Ein Fachmann weiß, wie die Umrechnung zwischen diesen Einheiten vorgenommen wird.

Das Spektrum ist insbesondere so gewählt, dass es dem bevorzugten Anwendungsgebiet des Emitters, nämlich der Infrarotspektroskopie und insbesondere der photoakustischen Spektroskopie entspricht. Dabei ist insbesondere die Schwingungsanregung der zu detektierenden Gasmoleküle bevorzugt, welche je nach Gasmolekülen einem bevorzugten spektralen Bereich entsprechen. Beispielsweise ist für die Anregung von CO₂ Molekülen ein Spektralbereich von etwa 2,4 Mikrometern (µm) geeignet. Besonders bevorzugte Wellenlängenbereiche der Infrarotstrahlung sind 700 nm bis 10 µm, bevorzugt 1 bis 10 µm, besonders bevorzugt 2 µm bis 10 µm.

Zur Erzeugung der Infrarotstrahlung ist bevorzugt die Bereitstellung thermischer Energie in Form eines Mikro-Heizelements vorgesehen. Unter einem Mikro-Heizelement wird bevorzugt ein Heizelement mit Abmessungen der Größenordnung Mikrometer (µm) verstanden. Dabei umfasst das Heizelement eine erhitzbare Schicht aus einem leitfähigen Material, welches bei Durchfluss eines elektrischen Stroms Joulesche Wärme produziert. Die produzierte Wärme zeigt bevorzugt eine Abhängigkeit vom ohmschen Widerstand des Elements und vom Quadrat der Stromstärke bzw. vom Quadrat der angelegten Spannung und dem inversen ohmschen Widerstand, je nachdem, ob eine Strom- oder eine Spannungsquelle verwendet wird. Eine thermische Quelle infraroter Strahlung hat für die photoakustische Spektroskopie (PAS) vorteilhafte Eigenschaften, wie z. B. eine breitbandige Emission, durch die eine Vielzahl verschiedenster Gas moleküle mit nur einer Lichtquelle angeregt werden können. Gleichzeitig ist ein thermischer IR-Emitter besonders kostengünstig, einfach herzustellen und langlebig.

In einem Gleichgewichtszustand ist die produzierte Wärme gleich zu den Wärmeverlusten durch Wärmeleitung, Konvektion und Wärmestrahlung (synonym: thermische Strahlung, Infrarotstrahlung), welche an den äußeren Grenzflächen der stromdurchflossenen erhitzbaren Schicht abgegeben wird. Wie dem Fachmann bekannt ist, verursacht die produzierte Wärme unter anderem thermische Strahlung, insbesondere durch thermische Bewegung von Teilchen, welche z. B. eine Beschleunigung von Ladungsträgern und/oder oszillierende Dipolmomente zur Folge hat. Somit kann durch eine stromdurchflossene erhitzbare Schicht gezielt Infrarotstrahlung erzeugt werden. Die erhitzbare Schicht ist bevorzugt aus Metall, beispielsweise aus Wolfram oder aus Platin auch Silizium kann geeignet sein. Durch Anlegen einer geeigneten Spannung und den daraus resultierenden Stromfluss wird Joulesche Wärme und somit Infrarotstrahlung erzeugt.

Das Strahlungsspektrum eines erhitzten Körpers lässt sich dabei bevorzugt angenähert durch das Planck'sche Strahlungsgesetz beschreiben, wobei dem Fachmann die Unterschiede einer realen erhitzbaren Schicht zu einem schwarzen Körper bekannt sind, beispielsweise der Emissionsgrad oder die reale Abweichung von einem thermischen Gleichgewicht des Körpers. Trotz dieser Abweichungen werden das erzeugte Spektrum und dessen Intensität im Wesentlichen von der Temperatur und der abstrahlenden Fläche gemäß dem Planck'schen Strahlungsgesetz beschrieben.

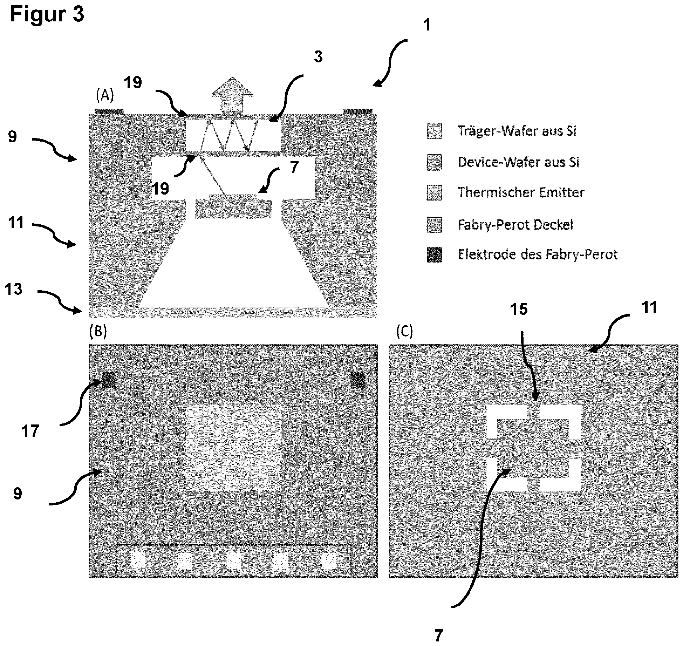

Die Strahlung kann dabei isotrop, d.h. in alle Raumrichtungen gleichmäßig ausgehend vom Emitter ausgestrahlt werden. Bevorzugt ist gegenüber einer isotropen Emission der Strahlung jedoch eine Bündelung der Strahlung in Form eines Strahls, der entlang einer bevorzugten Emissionsrichtung in Form einer Grade orientiert ist. Die Orientierung der Strahlung kann insbesondere durch die Struktur des Mikro-Heizelementes festgelegt werden. Ein flächiges Mikroheizelement, welches zu einer Oberseite offen ist, wird bevorzugt in diese Richtung IR-Strahlung emittieren (vgl. Fig. 3A). Vorteilhaft sorgt zudem das integrierte Fabry-Pérot-Interferometer nicht nur für eine Selektion der Wellenlänge, sondern auch der Orientierung des Strahles in eine gewünschte Emissionsrichtung, welche orthogonal zu den Spiegeln des Fabry-Pérot-Interferometer verläuft. Es können aber auch zusätzliche Komponenten wie z. B. Linsen im Emitter integriert oder extern angebracht sein, um für eine weitere Bündelung bzw. Kollimation des Strahls sorgen.

Ein Fachmann weiß, wie er durch das Design der Strahlungsquelle (Mikroheizelement) und Anordnung des Fabry-Pérot-Interferometer sowie ggf. durch Verwendung weiterer Komponenten das Emissionsprofil der Strahlungsquelle so formt, dass ein gewünschtes Strahlprofil sowie eine gewünschte Emissionsrichtung resultieren. Dabei kann der IR-Emitter das Mikro-Heizelement und das Fabry-Pérot-Interferometer ohne zusätzliche Linsen umfassen, als auch ein System umfassend Mikro-Heizelement und Fabry-Pörot-Interferometer und mindestens einer Linse zur Kollimation des Strahls. Der Begriff Strahl meint vorzugsweise den gebündelten Teil der Strahlung entlang der bevorzugten Emissionsrichtung des IR-Emitters.

Somit kann ein Fachmann durch gezieltes Design des (Mikro-) Heizelements ein bevorzugtes Spektrum mit einer bevorzugten Intensitätsverteilung erzielen. Hierzu sind neben dem Material und der geometrischen Ausgestaltung des Heizelements bevorzugt die zur Verfügung gestellte elektrische Energie, sowie die Größe der Wärmeverluste des Heizelements neben der Wärmestrahlung maßgeblich. Die Größe dieser Wärmeverluste wird beispielsweise bestimmt durch die Wärmeleitfähigkeit zwischen dem Heizelement und den angrenzenden Materialien und/oder Fluiden sowie deren Wärmekapazität und der Größe der Grenzfläche(n).

Das Mikro-Heizelement ist bevorzugt zumindest teilweise freistehend bzw. freitragend und erlaubt z. B. innerhalb des IR-Emitters thermische Dehnungen aufgrund von starken Temperaturänderungen. Teilweise freitragend bedeutet, dass es an den Grenzflächen zumindest teilweise nicht kraft- und/oder formschlüssig mit anderen Elementen des Emitters verbunden ist. Hierdurch kann eine besonders geringe thermische Masse realisiert werden, welche eine schnelle elektrische Modulation erlaubt.

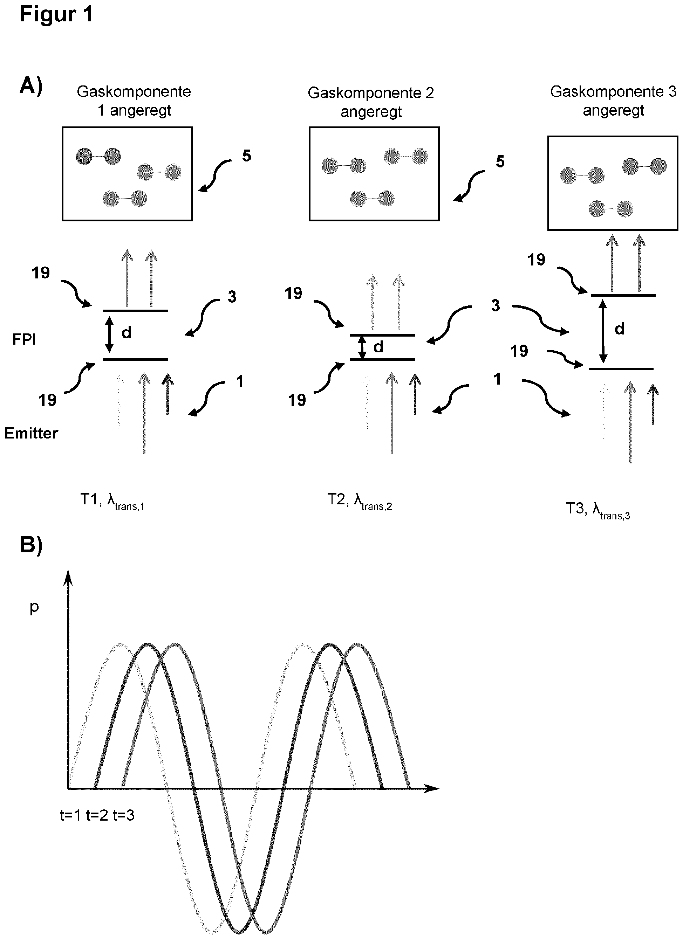

Ein IR- Emitter umfassend ein derartiges Mikro-Heizelement ist besonders kostengünstig und robust, gleichzeitig lässt sich aufgrund der spektralen Breite der Emission eine Vielzahl von Gasmolekülen bei der photoakustischen Spektroskopie detektieren. Durch die Integration eines wellenlängenselektiven MEMS Fabry-Pörot-Interferometers lässt sich vorteilhaft hierbei durch geeignete Anregungsschemata zudem bei einer Messung mehrere Gaskomponenten analysieren (vgl. Fig. 1).

In einer bevorzugten Ausführungsform umfasst das Spektrometer eine Steuereinheit, welche konfiguriert ist, eine Transmission des MEMS Fabry-Pérot-Interferometer derart zu steuern, dass die Messzelle mindestens zu einem ersten Zeitpunkt mit einer ersten Wellenlänge und zu einem zweiten Zeitpunkt mit einer zweiten Wellenlänge bestrahlt wird, sodass zum ersten Zeitpunkt eine erste Gaskomponente und zum zweiten Zeitpunkt eine zweite Gaskomponente des Gasgemisches zur Ausbildung von Schalldruckwellen angeregt wird.

Eine Steuereinheit ist bevorzugt geeignet, elektrische Steuersignale auszugeben, welche zum einen das MEMS Fabry-Pörot-Interferometer und zum anderen die Stromzufuhr zum Mikro-Heizelement steuern. Dafür kann die Steuereinheit bevorzugt mindestens zwei Signalausgänge aufweisen, wobei ein Ausgang vorzugsweise mit einem Signaleingang MEMS Fabry-Pérot-Interferometer verbunden wird und ein anderer Ausgang mit einem Signaleingang des Mikro-Heizelement. Die hier ausgegebenen Signale werden vorzugsweise Ansteuerungssignale oder Steuerungssignale genannt.

Ansteuerung bedeutet bevorzugt, dass elektrische Steuersignale direkt an den MEMS Fabry-Pérot-Interferometer und das Mikro-Heizelement übermittelt werden und in den gewünschten Strahlungseigenschaften resultieren. Bei dem Mikro-Heizelement kann so insbesondere eine bestimmte Temperatur und/oder ein bestimmter zeitlicher Temperaturverlauf eingestellt werden. Außerdem kann durch Einstellung der zeit- und wellenlängenabhängigen Transmission des MEMS Fabry-Pörot-Interferometer (eventuell in Abstimmung mit einem Temperaturverlauf des Mikro-Heizelementes) ein Modulationssignal zur gleichzeitigen Detektion mehrerer Gaskomponenten erzielt werden. Typischerweise handelt es sich um ein analoges Signal, welches von der Steuereinheit erzeugt wird. Diese wiederum kann bevorzugt ein geeignetes, digitales, elektronisches Signal, beispielsweise von einem Steuerungscomputer oder Eingabemodul erhalten, welches dann vorteilhafterweise von der Steuereinheit in geeignete Ansteuerungssignale übersetzt wird.

Die Steuereinheit umfasst bevorzugt einen Prozessor, beispielsweise einen Mikroprozessor. Es können auch andere integrierte Schaltungen, welche in der digitalen Elektronik zur Steuerung verwendet werden, zum Einsatz kommen.

Eine Steuereinrichtung, insbesondere in Form einer in den Emitter integrierten Steuerung, ist sehr kompakt und einfach zu handhaben. Die Steuereinrichtung weist für die Eingabe bevorzugt eine geeignete Schnittstelle zur Verbindung bspw. mit einem Computer auf. Es kann ebenso gewünscht sein, dass über diese Schnittstelle auch Daten von der Steuerung an das Eingabegerät übertragbar sind, wie beispielsweise die aktuelle Temperatur des Heizelements, die Modulationsfrequenz oder andere Statusinformationen.

Die Verwendung einer geeigneten Steuereinheit kann die gewünschte Verwendung des Spektrometers erheblich vereinfachen. Beispielsweise können geeignete Spektroskopie-Signale an einem PC gestaltet werden. Über ein Eingabemodul werden die gewünschten Signale an die Steuereinheit übertragen. Von dieser werden die zeit- und wellenlängenabhängigen Ansteuerungssignale erzeugt, welche eine entsprechende IR-Strahlung auf die Messzelle in hoher Übereinstimmung mit den theoretischen Vorgaben sicherstellt.

Die Steuersignale können dabei vorzugsweise derart eingestellt werden, dass das MEMS Fabry-Pérot-Interferometer zu einem ersten Zeitpunkt eine ersten Wellenlänge bzw. einen ersten Wellenlängenbereich transmittiert und zu einem zweiten Zeitpunkt eine zweiten Wellenlänge bzw. einen ersten Wellenlängenbereich transmittiert, sodass zum ersten Zeitpunkt eine erste Gaskomponente und zum zweiten Zeitpunkt eine zweite Gaskomponente des Gasgemisches zur Ausbildung von Schalldruckwellen angeregt wird.

Vorteilhaft lässt sich mittels eines Fábry-Pérot-Interferometers besonders präzise und schnell ein gewünschter spektraler Bereich zur Anregung einer Gaskomponente selektieren. Beispielsweise kann zu einem ersten Zeitpunkt eine erste Wellenlänge für CO₂ mit etwa 4,3 Mikrometern (µm) gewählt werden, während eine zweite Wellenlänge ungefähr 3,4 µm betragen kann, um beispielsweise Methan zu detektieren.

Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

In einer bevorzugten Ausführungsform ist die Steuereinheit konfiguriert, eine Transmission des MEMS Fabry-Pörot-Interferometers derart zu steuern, dass die Messzelle mit einer vorgegebenen Zeitabhängigkeit mit zwei oder mehr Wellenlängen bestrahlt wird, um zwei oder mehr Gaskomponenten mit der vorgegebenen Zeitabhängigkeit anzuregen.

Bevorzugt kann die vorgegebene Zeitabhängigkeit einer periodischen Bestrahlung entsprechen, wobei die periodische Bestrahlung mit zwei oder mehr unterschiedlichen Wellenlängen jeweils eine unterschiedliche Periodizität, Amplitude und/oder Phase aufweisen.

In bevorzugten Ausführungsformen kann beispielsweise auch eine Steuerung der Transmissionseigenschaften des Fábry-Pérot-Interferometer derart erfolgen, dass eine Anregung mit periodischen Signalen verschiedener Wellenlängen, beispielsweise Sinus oder Cosinus-Funktionen erfolgt, wobei die periodischen Signale für die jeweilige Wellenlänge gegeneinander phasenverschoben vorliegen (vgl. Fig. 1b).

Durch den Phasenversatz erfolgt zu unterschiedlich Zeitpunkten eine maximale Anregung einer jeweiligen Gaskomponente mit entsprechender Wellenlänge.

Dieser Phasenversatz ist vorteilhaft auch bei einer zeitabhängigen Detektion der resultierenden Schallwellen detektierbar, sodass die Schallsignale zuverlässig den jeweiligen Gaskomponenten zugeordnet werden können.

In bevorzugten Ausführungsformen ist die Periodizität der periodischen Signale mit unterschiedlicher Wellenlänge identisch und die Signale lediglich phasenversetzt.

In anderen Ausführungsformen kann auch eine unterschiedliche Periodizität für die jeweiligen periodischen Signale gewählt werden.

Hierdurch kann eine zeit- und wellenlängenabhängige Modulation nicht nur eine Optimierung der Anregung einer jeweiligen Gaskomponente in Bezug auf deren Absorptionsspektrum bewirken, sondern zudem auf ggf. unterschiedliche Relaxationsverhalten abgestimmt werden. Beispielsweise kann es bevorzugt sein eine Gaskomponente mit verzögerten Relaxationsverhalten mit einem periodischen Signal einer geringeren Frequenz anzuregen, als eine Gaskomponente mit einer höheren Frequenz.

Die erfindungsgemäße Integration eines abstimmbaren Fábry-Pérot-Interferometers erlaubt mithin eine weite Bandbreite für Anregungsschemata, welche zu besonders aussagekräftigen Analyseergebnissen führen.

In einer bevorzugten Ausführungsform der Erfindung ist die Steuereinheit konfiguriert zur Regulation der Temperatur des Heizelements in einem Bereich zwischen 50 °C und 1000 °C, bevorzugt zwischen 100 °C und 1000 °C. Zu diesem Zweck ist die Steuereinheit bevorzugt dafür eingerichtet, dem Heizelement geeignete elektrische Leistungen zur Verfügung zu stellen. Insbesondere soll die Temperatur hinreichend genau einstellbar sein, konstant gehalten werden und/oder zeitlich moduliert werden können. Dafür kann ein Regelmechanismus mit einer Feedbackschleife verwendet werden. Zur Messung der aktuellen Temperatur des Heizelements kann z. B. mindestens ein Temperatursensor an geeigneter Stelle des Elements integriert sein.

In einer weiteren bevorzugten Ausführungsform ist der IR-Emitter für eine Regulation der Temperatur des Heizelements konfiguriert, sodass das Heizelement eine breitbandige Infrarotstrahlung mit einer spektralen Breite von mindestens 500 nm, bevorzugt mindestens 1000 nm emittiert. Der Fachmann weiß, dass die Lage, Spektrum und/oder Breite einer durch das Heizelement emittierten Strahlung durch die Materialwahl und/oder Temperatur des Mikro-Heizelementes vorgeben werden kann. Bevorzugt ist der IR-Emitter breitbandig ausgeführt mit den vorgenannten spektralen Breiten im Infrarotbereich, d.h. in einem Wellenlängenbereich von bevorzugt 700 nm bis 10 µm, bevorzugt 1 bis 10 µm, besonders bevorzugt 2 µm bis 10 µm. Beispielsweise kann eine breitbandige Emission zwischen ca. 2 µm bis 5 µm bevorzugt sein, wobei wie beschrieben mittels des Fabry-Pérot-Interferometer schmalere Emissionsspektren zur Anregung spezifischer Gasmoleküle selektiert werden können.

Unter einem Fabry-Pérot-Interferometer wird eine optische Komponente verstanden wie sie aus dem Stand der Technik hinreichend bekannt ist. Insbesondere handelt es sich bei einem Fabry-Pérot-Interferometer um einen optischen Resonator, welcher aus zwei teildurchlässigen Spiegeln gebildet wird. Das Transmissionsspektrum einer solchen Anordnung ist durch schmale Transmissions-Maxima für Wellenlängen gekennzeichnet, welche die Resonanzbedingung erfüllen. Spektralbereiche, welche nicht die Resonanzbedingung erfüllen, werden in der Transmission bevorzugt nahezu vollständig ausgelöscht. Dies geschieht durch konstruktive bzw. destruktive Interferenz der Teilstrahlen. Damit lässt sich das Fabry-Pérot-Interferometer als optischer Filter einsetzen, der aus einer breitbandigen Strahlung ein schmalbandiges Spektrum herausfiltert. Spiegelverschiebungen ermöglichen es wie im Folgenden erläutert, die spektralen Eigenschaften der transmittierten Strahlung abzustimmen bzw. einzustellen.

Typischerweise erzeugt ein FPI eine Reihe von Transmissionspeaks aufeinanderfolgender Interferenzordnungen. Der Abstand der Transmissionsmaxima wird als freier spektraler Bereich (*free spectral range,* FSR) bezeichnet. Der Frequenzabstand ist u.a. vom Abstand der Spiegel und dem Brechungsindex abhängig. Die Finesse dient zur Charakterisierung des Resonators und definiert sich als Verhältnis zwischen dem freien Spektralbereich und der Halbwertsbreite eines einzelnen Maximums. Die Finesse und die spektrale Auflösung eines Fabry-Pérot-Interferometer können u.a. vom Reflexionsgrad der Spiegel ab, aber auch von Defekten wie Wölbung, Neigung und Rauhigkeit bestimmt werden.

Eine Abstimmung bzw. Durchstimmung der Transmission eines Fabry-Pérot-Interferometers kann bevorzugt durch eine Veränderung des Abstandes einer planparallelen Spiegelanordnung und somit der Länge des Resonators erfolgen. Hierdurch ändert sich die Resonanzbedingung und die Peak Position der einzelnen Transmissionspeaks (Ordnungen) wird verschoben.

Für große Abstimmbereiche kann bevorzugt eine niedrige Ordnung gewählt werden und für den Infrarotbereich eine Resonatorlänge (Spiegelabstand) von einigen Mikrometern.

Durch Wahl einer höheren Ordnungen kann zwar die spektrale Auflösung erhöht werden (geringere FWHM) gleichzeitig schrumpft jedoch der freie spektrale Bereich und folglich Abstimmbereich in dem der Transmissionspeak der jeweiligen Ordnung durch Änderungen des Spiegelabstandes verschoben wird.

Ein MEMS Fabry-Pörot-Interferometer meint bevorzugt ein Fabry-Pörot-Interferometer dessen Resonanzbedingung mittels eines MEMS-Aktuators eingestellt werden kann.

In einer bevorzugten Ausführungsform umfasst das MEMS Fabry-Pérot-Interferometer zwei teildurchlässige Spiegel, welche einen optischen Resonator bilden und deren Abstand und/oder Orientierung mittels eines MEMS-Aktuators zur Einstellung einer wellenlängenspezifischen Transmission veränderbar ist.

Ein MEMS-Aktuator ist bevorzugt ein Aktuator, der mithilfe von üblichen Herstellungsmethoden der Mikrosystemtechnik hergestellt wird und des Weiteren vorteilhafterweise Abmessungen in der Größenordnung µm aufweist.

In einer bevorzugten Ausführungsform der Erfindung ist der MEMS-Aktuator ausgewählt aus der Gruppe umfassend elektrostatischer Aktuator, piezoelektrischer Aktuator, elektromagnetischer Aktuator und/oder thermischer Aktuator. Besonders bevorzugt handelt es sich bei dem MEMS-Aktuator um einen elektrostatischen Aktuator, welcher den Abstand der Spiegel reguliert.

In einer bevorzugten Ausführungsform kann ein erster Spiegel fixiert vorliegen und ein zweiter Spiegel über eine Feder oder gespannte Membrane aufgehangen sein, um eine Rückstellkraft bereitzustellen. Einer oder beide Spiegel liegen bevorzugt direkt oder indirekt mit Elektroden verbunden vor, sodass durch Anlegen einer Spannung zwischen den Elektroden eine elektrostatische Aktuierung erfolgt.

Mittels Anlegen entsprechend zeitabhängiger Steuerspannungen kann über einen derartigen elektrostatischen Aktuator der Abstand der beiden Spiegel und somit die Transmissionseigenschaften des Fabry-Pérot-Interferometer schnell und präzise eingestellt werden. Ein solcher Aktuator ist besonders kompakt, robust und wartungsarm und lässt sich einfach und kostengünstig herstellen

Die Spiegel selbst können beispielsweise zweiteilig aus Spiegelträger und Spiegelschichten gebildet werden.

In bevorzugten Ausführungsformen sind die teildurchlässigen Spiegel dielektrische Spiegel, welche ein oder mehrere Schichten aus Silizium, Polysilizium und/oder Siliziumdioxid umfassen. Bevorzugt sind die Schichten durch abwechselnde hohe und niedrige Brechungsindizes gekennzeichnet. Beispielsweise können die Spiegel hochbrechende Polysiliziumschichten und niedrigbrechende Siliziumdioxidschichten umfassen.

Im Stand der Technik sind eine Reihe von Ausgestaltungsmöglichkeiten von MEMS basierten Fabry-Pérot-Interferometers bekannt (vgl. Ebermann et al. 2016).

In Abhängigkeit der Implementation können diese MEMS-Interferometer auf Basis von Volumenmikromechanik (*bulk micromachining*) oder Oberflächen-Mikromechanik (*surface micromachining*) klassifiziert werden.

Die Oberflächen-Mikromechanik erzeugt die Mikrostrukturen in der Regel durch Abscheidung und Ätzen von Strukturschichten auf einem Substrat. Demgegenüber werden bei der Volumen-Mikromechanik die Mikrostrukturen in der Regel durch selektives Ätzen im Substrat erzeugt. Typischerweise erzeugt die Oberflächen-Mikromechanik Strukturen auf einem Substrat, während die Volumenmikromechanik Strukturen innerhalb eines Substrats bereitstellt.

Für Fabry-Pörot-Interferometer auf Basis von Volumen-Mikromechanik bestehen in der Regel aus zwei oder mehr Wafern, welche mittels Nass- und Trockenätzen, Abscheidung von Elektroden und optischen Schichten strukturiert und schließlich zur Bildung der Fabry-Pörot-Kavität miteinander verbunden werden (*bonding*)*.* Die Abstände der Kavitäten werden typischerweise durch zusätzliche Abstandsschichten oder durch Ätzen von Spalten realisiert. Beide Spiegel bzw. Reflektoren werden in der Regel durch relativ dicke, mechanisch steife Substrate unterstützt. Hierdurch sollen Verformungen durch Schichtspannungen vermieden werden und glatte, planparallele Spiegel während der Aktuierung gewährleistet werden. Die Rückseiten der Substrate können bevorzugt antireflektierend (ARC) beschichtet sein. In der Volumen-Mikromechanik ist es insbesondere möglich große Kavitäten und somit Resonatorabstände von mehreren Mikrometern zu realisieren.

Zudem können die Elektroden zur elektrostatischen Aktuierung mit einem solchen Aufbau vorzugsweise von den Spiegeln bzw. Reflektoren örtlich getrennt werden. Hierdurch sind unterschiedliche Abstände für die Spiegel (Resonatorspalt) und Antriebs- oder Aktuatorelektroden (Elektrodenspalt) möglich. Die räumliche Trennung erlaubt eine flexiblere Ausgestaltung der mechanischen Bewegung entsprechend des gewünschten spektralen Abstimmungsbereichs.

Insbesondere kann durch Wahl größerer Abstände für den Elektrodenspalt gegenüber dem Resonatorspalt beispielsweise mittels einer Abstandsänderung von weniger als 30% des Elektrodenspaltes ein vollständiges Durchstimmen des Fabry-Pérot-Interferometers erreicht werden. Ein Pull-in Effekt wird effektiv über den gesamten Betriebsbereich vermieden. Während das Design und die Herstellung komplexer sein können, bietet die Technologie ausgezeichnete Performance in Bezug auf den Abstimmbereich und die Auflösung.

Ein Beispiel eines durchstimmbaren Fabry-Pörot-Interferometers auf Volumen-Mikromechanik wird in der DE 10226305 C1 offenbart.

Fabry-Pérot-Interferometer auf Basis von Oberflächen-Mikromechanik werden in der Regel monolithisch aus nur einem Wafer hergestellt. Ein Stapel von Schichten zur Bildung der Elektroden, ein Abstandshalter und die Spiegel bzw. Reflektoren werden auf einer Seite des Wafers aufgebracht. Der Abstandshalter dient als Opferschicht, die anschließend teilweise geätzt wird, um einen der Spiegel als freistehende (bewegliche) Membran freizugeben. Optional kann das Substrat unter dem anderen (festen) Reflektor ebenfalls entfernt werden. Bevorzugt wird ebenfalls die Rückseite des Substrats antireflektierend beschichtet.

Der Abstand zwischen (Aktuator)Elektroden (Elektrodenspalt) und Spiegeln (Resonatorspalt) sind identisch, was den Abstimmbereich aufgrund des Pull-In-Effektes reduziert. In einigen Ausführungsformen fungieren die Reflektoren bzw. Spiegel selbst als Steuerelektroden in anderen Ausführungsformen liegen Spiegel mechanisch mit den Elektroden verbunden vor, sodass eine elektrostatische Anziehung der Elektroden zu einer Abstandsverminderung der Spiegel führt (und umgekehrt). Vorteilhaft ist die Technologie jedoch besonders einfach zu realisieren und erlaubt kostengünstige und besonders kleine Chip-Größen.

In bevorzugten Ausführungsformen kann das MEMS Fabry-Pérot-Interferometer in Volumen-Mikromechanik oder Oberflächen-Mikromechanik ausgebildet sein.

Im Sinne der Erfindung ist es bevorzugt vorgesehen, dass das MEMS Fabry-Pörot-Interferometer zusammen (bevorzugt oberhalb) eines Mikro-Heizelementes monolithisch innerhalb eines IR-Emitter installiert vorliegt.

Mikro-Heizelement meint bevorzugt wie obig ausgeführt ein Heizelement mit Abmessungen der Größenordnung Mikrometer (µm),

In einer bevorzugten Ausführungsform umfasst das Mikro-Heizelement ein Substrat, auf welchem mindestens teilweise eine erhitzbare Schicht aus einem leitfähigen Material aufgebracht ist, an welchem Kontakte für eine Strom- und/oder Spannungsquelle vorliegen,

Bevorzugt kann das Substrat ausgewählt sein, aus einer Gruppe umfassend Silizium, monokristallines Silizium, Polysilizium, Siliziumdioxid, Siliziumcarbid, Silizium-Germanium, Siliziumnitrid, Nitrid, Germanium, Kohlenstoff, Galliumarsenid, Galliumnitrid und/oder Indiumphosphid.

Dabei umfasst das Mikro-Heizelement eine erhitzbare Schicht aus einem leitfähigen Material, welches bei Durchfluss eines elektrischen Stroms Joulesche Wärme produziert. Das Heizelement umfasst insbesondere ein Substrat, auf dem die erhitzbare Schicht vorliegt. Das Substrat bildet bevorzugt die Basis des Heizelements. Dabei kann das Substrat auch weitere Elemente des IR-Emitters, wie beispielsweise Grundelement und/oder Gehäuseelemente zumindest teilweise umfassen. Das Substrat kann vorteilhafterweise durch etablierte Prozessschritte, insbesondere aus der Halbleiter- und/oder Mikrosystemherstellung, geeignet geformt werden. Die vorstehend genannten Materialien sind in der Halbleiter- und/oder Mikrosystemherstellung besonders einfach und kostengünstig zu bearbeiten und eignen sich ebenfalls gut für eine Massenherstellung. Ebenso sind diese Materialien für ein Dotieren und/oder Beschichten besonders geeignet, um in bestimmten Bereichen die gewünschten elektrischen, thermischen und/oder Strahlungseigenschaften zu erzielen.

Als leitfähiges Material zur Bildung der erhitzbaren Schicht eignen sich beispielsweise Platin, Wolfram, (dotiertes) Zinnoxid, monokristallines Silizium, Polysilizium, Molybdän, Titan, Tantal, Titan-Wolfram Legierung, Metallsilizid, Aluminium, Graphit und/oder Kupfer. Diese Materialien weisen zum einen die gewünschten thermischen, elektrischen, mechanischen und/oder Strahlungseigenschaften auf und sind darüber hinaus besonders leicht und kostengünstig zu verarbeiten.

Die monolithische Integration des Fabry-Pérot-Interferometers zusammen mit dem Mikro-Heizelement kann mittels unterschiedlicher Implementierung erreicht werden.

Erfindungsgemäß umfasst der Infrarot-Emitter mindestens zwei Substratlagen, welche durch Bonden mindestens zweier Wafer gebildet werden, wobei ein Deckel-Wafer das MEMS Fabry-Pérot-Interferometer und ein Device-Wafer das Mikro-Heizelement umfasst.

Mittels des Mikro-Heizelementes wird vorzugsweise wie obig beschrieben eine breitbandige Infrarotstrahlung erzeugt, welche durch im Deckel-Wafer befindliche MEMS Fabry-Pérot-Interferometer moduliert werden kann. Der Deckel-Wafer befindet sich zu diesem Zweck bevorzugt auf bzw. oberhalb des Device-Wafers.

Die Begriffe oben bzw. unten oder ähnliche Angaben beziehen sich im Sinne der Erfindung bevorzugt auf die Emissionsrichtung des vom IR-Emitters. Eine obere Komponente befindet sich bevorzugt strahlaufwärts, während eine untere Komponente sich strahlabwärts befindet. Das Fabry-Pérot-Interferometer befindet sich bevorzugt oberhalb und planparallel über dem Mikro-Heizelement. Die Anordnung gewährleistet auf einfache Weise eine intrinsische präzise Ausrichtung des planparallelen Fabry-Pörot-Interferometers zu einem sich darunter befindlichen Mikro-Heizelement, da beide Elemente durch die sehr präzisen Wafer-Oberflächen vorgegeben sind.

Eine aufwändige Justage zwischen Fabry-Pérot-Interferometer und Emissionsrichtung des IR-Emitters, wie bei Verwendung beider Elemente als separate Komponenten, ist mit der erfindungsgemäßen Integration des Fabry-Pérot-Interferometer in den IR-Emitter nicht notwendig.

Das Mikro-Heizelement ist auf dem Device-Wafer definiert. Hierzu können beispielsweise ein Herstellungsverfahren mit folgenden Schritten verwandt werden:
- Ätzen des Substrats;
- Abscheiden eines leitfähigen Materials auf dem Substrat;
- Vorzugsweise Strukturierung des leitfähigen Materials zu einer erhitzbaren Schicht;
- Kontaktierung des leitfähigen Materials.

Als Substrat für den Fabry-Pörot-Interferometer kann z. B. eines der bevorzugten, vorstehend genannten Substrat-Materialien wie beispielsweise Silizium verwendet werden.

Beim Ätzen kann der Device-Wafer als Rohling in die gewünschte Grundform des Mikro-Heizelements gebracht werden. Beispielsweise kann eine dünnflächige Substratschicht, welche über dünne Stege mit dem Fabry-Pörot-Interferometer verbunden ist, geätzt werden (vgl. Fig. 3C).

In einem nächsten Schritt wird das leitfähige Material für die erhitzbare Schicht abgeschieden. Als leitfähiges Material eignen sich ebenfalls insbesondere die vorgenannten Materialien.

Sollte eine weitere Strukturierung des leitfähigen Materials gewünscht sein, kann diese z. B. durch weitere Ätzprozesse vorgenommen werden. Ebenso kann zusätzliches Material abgeschieden werden oder eine Dotierung durch übliche Verfahren vorgenommen werden.

Zur Kontaktierung des leitfähigen Materials kann zusätzlich geeignetes Material, wie z. B. Kupfer, Gold und/oder Platin auf dem leitfähigen Material durch gängige Prozesse abgeschieden werden. Hierfür können beispielsweise physikalische Gasphasenabscheidung (PVD), chemische Gasphasenabscheidung (CVD) oder elektrochemische Abscheidung zum Einsatz kommen.

Auf diese Weise kann ein besonders fein strukturiertes Mikro-Heizelement hergestellt werden, welches bevorzugt Abmessungen im Mikrometerbereich hat. Ebenso haben sich diese Herstellungsschritte besonders bewährt und gehören zu Standardverfahrensschritten der Halbleiterprozessierung.

Bevorzugt kann das Ätzen und/oder eine Strukturierung auch ausgesucht sein aus der Gruppe umfassend Trockenätzen, nasschemisches Ätzen und/oder Plasmaätzen, insbesondere Reaktives lonenätzen, Reaktives lonentiefenätzen (Bosch-Prozess); und/oder das Abscheiden ausgesucht aus der Gruppe umfassend physikalische Gasphasenabscheidung (PVD), insbesondere thermisches Verdampfen, Laserstrahlverdampfen, Lichtbogenverdampfen, Molekularstrahlepitaxie, Sputtern, chemische Gasphasenabscheidung (CVD) und/oder Atomlagenabscheidung (ALD).

Diese Verfahren sind für die Herstellung von feinen Strukturen mit Größenordnungen im Mikrometerbereich besonders geeignet. Insbesondere durch den Boschprozess können sehr feine Strukturen mit hohem Aspektverhältnis erzeugt werden, die für ein kompaktes, effizientes und bevorzugt in den restlichen Aufbau des Emitters vollintegriertes Mikro-Heizelement von Vorteil sind.

Das MEMS Fabry-Pérot-Interferometer wird bevorzugt innerhalb des Deckel-Wafers definiert. Hierzu kann bevorzugt wie obig beschrieben vorzugsweise Methoden der Volumen-Mikromechanik oder Oberflächen-Mikromechanik verwandt werden.

D.h. es kann beispielsweise bevorzugt sein, das MEMS Fabry-Pérot-Interferometer mittels Volumen-Mikromechanik unter Verwendung von zwei oder mehr Wafern, mittels Ätzen, Abscheiden von Elektroden und optischen Schichten (Spiegeln) zu definieren und anschließend durch Bonding zu integrieren.

Ebenso kann es bevorzugt sein, das MEMS Fabry-Pörot-Interferometer mittels Methoden der Oberflächen-Mikromechanik monolithisch aus einem Wafer zu formen. Hierzu kann ein Stapel von Schichten zur Bildung der Elektroden, ein Abstandshalter und die Spiegel bzw. Reflektoren werden auf einer Seite des Fabry-Pérot-Interferometers aufgebracht werden. Der Abstandshalter dient als Opferschicht, die anschließend teilweise geätzt wird, um einen der Spiegel als freistehende (bewegliche) Membran freizugeben. Das Substrat kann unter dem anderen (festen) Reflektor ebenfalls entfernt werden, um eine Kavität zu schaffen, unter der sich nach dem Bonden von Deckel-Wafer und Device-Wafer das Mikro-Heizelement befindet (vgl. Fig. 3A).

Das Bonden von Wafern beschreibt bevorzugt einen Verfahrensschritt in der Halbleiter- und Mikrosystemtechnik, bei dem zwei Wafer oder Scheiben, z. B aus Silizium, Quarz, Glas und/oder den vorgenannten Materialien miteinander verbunden werden.

Beim Bonden können vorzugsweise verschiedene Verfahren zum Einsatz kommen:
- Beim direkten Bonden, insbesondere von Silizium-Wafern, werden bevorzugt hydrophile und hydrophobe Oberflächen der Wafer unter hohen Temperaturen in Kontakt gebracht. Vorzugsweise wird dabei der eine Wafer mittig gegen den anderen gepresst, wobei vorteilhafterweise ein erster Kontaktpunkt entsteht. Diese mechanische Verbindung im Kontaktbereich beruht dabei vorzugsweise auf Wasserstoffbrücken und/oder Van-der-Waals-Wechselwirkungen. Der somit verbundene Kontaktbereich wird dabei vorzugsweise auf die übrige Waferfläche(n) ausgedehnt, indem anfangs vorhanden Abstandhalter zwischen diesen Flächen sukzessive entfernt werden. Dabei betragen die Prozesstemperaturen vorzugsweise zwischen 1000 °C und 1200 °C und es wird ein Druck auf die Wafer der Größenordnung 10 Megapascal (MPa) bis 25 MPa, insbesondere ungefähr 18 MPa, ausgeübt. Das DirektBonden kann vorzugsweise für die Verbindung zweier Silizumwafer und/oder Siliziumdioxidwafer verwendet werden.
- Beim anodischen Bonden findet insbesondere ein Glas mit erhöhter Na+-Ionenkonzentration (bevorzugt positiv geladenen Natriumionen) Verwendung, welches bevorzugt mit einem Siliziumwafer in Kontakt gebracht wird. Dabei wird eine elektrische Spannung angelegt, welche insbesondere konfiguriert ist, eine negative Polung am Glas zu erzeugen. Somit wird bevorzugt und insbesondere mithilfe einer erhöhten Prozesstemperatur erreicht, dass die Natriumionen (Na+) zur Elektrode diffundieren, wodurch sich bevorzugt eine Raumladungszone an der Grenzfläche ausbildet, welches eine Erhöhung des elektrischen Feldes bewirkt und Si-O-Si-Bindungen erzeugt. Diese Bindungen weiten sich bevorzugt sukzessive auf die gesamte Verbindungsfläche zwischen Glas und Silizium aus. Somit können insbesondere Glas und Siliziumwafer miteinander verbunden werden. Bei entsprechender Anpassung des Prozesses ist ebenso ein Bonden zweier Siliziumlagen und/oder einer Silizium-Metall Lage mit einem Glas möglich. Das anodische Bonden kann vorzugsweise bei Temperaturen von etwa 400 °C stattfinden, es kann ebenso bevorzugt bei "Niedrigtemperatur" bei etwa 180 °C stattfinden, wobei die zu bondenden Materialien vorzugsweise geschont werden. Bevorzugt können auch verschiedene der vorgenannten Materialien gebondet werden.
- Bevorzugt können auch Bond-Verfahren mit sogenannten Zwischenschichten zwischen den zu bondenden Wafern zum Einsatz kommen, wie bspw. das sogenannte Eutektische Bonden, welches vorzugsweise auch der einer Verbindung durch eine eutektische Legierung als Zwischenschicht, z. B. Si-Au (Silizium-Gold) oder Ge-AI (Germanium-Aluminium), basiert. Eine eutektische Legierung ist vorzugsweise eine Legierung, deren Bestandteile in einem solchen Verhältnis zueinander gemischt sind, dass bei einer bestimmten Temperatur die ganze Legierung flüssig bzw. fest wird. Eutektisches Bonden kann z. B. zum Verbinden zweier Siliziumwafer verwendet werden. Bevorzugt können jedoch auch andere der vorgenannten Materialien verbunden werden.
- Auch das Glas-Frit-Bonden beruht bevorzugt auf der Verwendung einer Zwischenschicht zwischen den zu verbindenden Wafern, wobei die Verbindungsbildung insbesondere durch Aufschmelzen von Glasloten/Glas-Fritten. Glaslot umfasst bevorzugt ein Glas, welches eine niedrige Erweichungstemperatur aufweist, bspw. ca. 400 °C. Glasfritte umfasst bevorzugt oberflächlich geschmolzenes Glaspulver, dessen Glaskörner bevorzugt zumindest teilweise zusammenbacken bzw. -sintern. Diese Art des Bondens kann bevorzugt Silizium- und/oder Siliziumdioxidwafer miteinander verbinden, bevorzugt jedoch auch andere vorgenannte Materialien.
- Das adhäsive Bonden beschreibt bevorzugt eine Verbindungsbildung durch eine Zwischenschicht umfassend Klebstoff. Durch adhäsives Bonden können vorzugsweise verschiedene der vorgenannten Materialien miteinander gebondet werden.

Bevorzugt kann durch Fotolithographie, Ätzen und/oder Lift-off-Verfahren ein selektives Bonden vorgenommen werden.

Durch Bonden mehrerer Lagen von einzeln vorbearbeiteten Substraten können vorteilhafterweise komplexe Komponenten von photoakustischen Spektrometern und insbesondere vollintegrierte, komplette Gassensoren einfach hergestellt werden.

Das Bonden von Strukturen aus vorbearbeiteten Substraten erlaubt die einfache Herstellung komplexer Strukturen, welche nur mit großem Aufwand aus einem einzelnen Wafer und/oder Substrat hergestellt werden könnten. Das Bonden mehrlagiger Substrate kann bspw. zur einfachen und effizienten Herstellung von Kavitäten bzw. Kammern IR-Emitters verwendet werden, ohne dass diese aufwendig aus dem Inneren eines Rohmaterials herausgearbeitet werden müssen.

Das Verbinden der Substratlagen bzw. des Fabry-Pérot-Interferometers mit dem Device-Wafer wird bevorzugt Waferbonden, Direktbonden, Oberflächenaktiviertes Bonden, Plasmaaktiviertes Bonden, Anodisches Bonden, Eutetkisches Bonden, Schweiß-Bonden, Glas-Frit-Bonden und/oder Adhäsives Bonden erreicht.

Mittels der vorgenannten Verfahrensschritte kann bevorzugt auf kostengünstige Weise ein besonders kompakter und robuster erfindungsgemäßer IR-Emitter mit Mikro-Heizelement und Fabry-Pérot-Interferometer erhalten werden.

Im erfindungsgemäßen System wird der IR-Emitter derart orientiert, dass sich die Messzelle in dessen Strahlengang befindet.

Das zu analysierende Gas befindet sich dabei bevorzugt in der mit Gas befüllbaren Messzelle bzw. Analysevolumen. In einer bevorzugten Ausführungsform ist die Messzelle ein nach außen zumindest bereichsweise abgeschlossenes oder abschließbares Volumen (bzw. Kammer(n)), in der sich das Gas befindet bzw. eingeleitet werden kann, z. B. durch eine verschließbare Öffnung in Form eines Verschlusses und/oder Ventils und/oder durch eine Zuleitung. Es kann sich aber auch um ein komplett abgeschlossenes oder abschließbares Volumen bzw. Kammer handeln, welches zumindest eine, vorzugsweise zwei verschließbare Öffnungen zur Einleitung und/oder Ausleitung des zu analysierenden Gases aufweist. So kann das zu analysierende Gas sehr gut lokalisiert werden, insbesondere in einem Strahlbereich der Infrarotstrahlung.

Die Messzelle kann vorzugsweise ebenso zumindest teilweise geöffnet sein. Dadurch kann insbesondere eine das Spektrometer umgebende Gasatmosphäre, gegenüber dem die Messzelle zumindest teilweise geöffnet ist, vermessen und auf ihre Zusammensetzung überprüft werden. Dies ist insbesondere interessant für Anwendungen im Bereich der Schadstoffmessung, aber auch z. B. für militärische Anwendungen oder zur Terrorabwehr, z. B. durch einen Giftgasangriff.

Vorteilhaft ist in diesem Fall, dass die Messzelle wohl definiert ist, so dass Infrarot-Emitter, Messzelle und der Schalldetektor derart angeordnet vorliegen, dass die von dem Infrarot-Emitter modulierbar emittierbare Infrarotstrahlung Gas in der Messzelle zur Ausbildung von Schalldruckwellen anregen kann, welche mit Hilfe des Schalldruckdetektors messbar sind.

Die Messzelle liegt bevorzugt im Strahlengang des Infrarot-Emitters vor. Das bedeutet bevorzugt, dass die Intensität des Strahls im Wesentlichen oder zumindest teilweise auf die dem Emitter zugewandte Seite des Analysevolumens trifft. Teilweise bedeutet bevorzugt zu mindestens 40 %, bevorzugt mindestens 50%, 60%, 70%, 80% oder mehr.

In einer bevorzugten Ausführungsform kann der Infrarot-Emitter von außen auf einen Vorzugsbereich der Messzelle ausgerichtet werden. Muss dabei durch eine Außenwand des der Messzelle hindurch gestrahlt werden, um ein Gas im Inneren anzuregen, ist die Außenwand bevorzugt zumindest in diesem Bereich für die IR-Strahlung im Wesentlichen transparent.

Die Messzelle ist bevorzugt mit Gas befüllbar. Das bedeutet, dass auch bei einem zumindest teilweise abgeschlossenen bzw. verschließbaren Volumen eine vorzugsweise verschließbare Öffnung zur Befüllung vorliegt. Vorzugsweise kann auch ein Gasfluss realisiert werden, indem die Messzelle z. B. einen Zulauf und einen Ablauf besitzt. Somit kann entweder ein kontinuierlicher Gasfluss in das Volumen realisiert werden oder ein diskontinuierlicher Gasfluss, bei dem z. B. während einer Befüllungs- bzw. Gasaustauschphase eine Befüllung bzw. ein Austausch des Gases in der Messzelle vorgenommen werden kann. In einer Analysephase wird der Gasfluss vorzugsweise unterbrochen, damit die photoakustische Spektroskopie stattfinden kann. Sollen zu verschiedenen Zeitpunkten verschiedene Gase (mit mehreren Gaskomponenten, beispielsweise verschiedene Brenngas) analysiert werden, kann dies vorzugsweise durch einen solchen Aufbau realisiert werden. Zwischen zwei zu analysierenden Gasen kann vorzugsweise ein Reinigungsgas zur Reinigung der Messzelle von etwaigen Gasrückständen zugeführt werden.

Bei einer Messzelle, welche zumindest teilweise geöffnet ist und somit vorzugsweise einen permanenten Gasaustausch mit einer Umgebung zulässt, findet eine Befüllung der Messzelle durch Wechselwirkung mit einer Gasatmosphäre der Umgebung statt.

In bevorzugten Ausführungsformen ist die Messzelle ein offenes System, welches eine oder mehrere Öffnungen aufweist, sodass ein zu analysierendes Gas in die Messzelle einströmen oder diffundieren kann. Die Öffnungen sind dabei bevorzugt groß genug, dass sie einen geeigneten Strömungswiderstand haben für ein Eindiffundieren haben und/oder den Aufbau einer akustischen Druckwelle in der Messzelle nicht verhindern. Herstellungsbedingt ist ein Querschnitt bevorzugt, der aus einem Ätzprozess hervorgeht. Beim nasschemischen Ätzen (z. B. mit Kaliumhydroxid - KOH) gibt es vorzugsweise eine Abhängigkeit von der Kristallrichtung, beim Trockenätzen kann ein im Wesentlichen quadratischer Querschnitt bevorzugt sein.

Beispielsweise können zwei oder mehr Öffnungen für die Messzelle mit einer maximalen Ausdehnung in mindestens eine Richtung von 1 nm bis 500 µm bevorzugt sein.

Eine Messzelle kann vorzugsweise eine Probekammer und eine Referenzkammer umfassen, welche durch einen Verbindungskanal oder Sensorkanal verbunden bzw. verbindbar sind.

Im Falle der Ausführungsform einer Messzelle, welche eine Probekammer und eine Referenzkammer aufweist, kann bevorzugt, in jeder Kammer mindestens einen Schalldetektor vorliegen, um in jeder Kammer separate Messungen durchzuführen und somit Störquellen, z. B. externe Schalldruckwellen, welche nicht von der in der Probekammer absorbierten IR-Strahlung herrühren, vorzugsweise nach der Messung herausrechnen zu können.

Ebenso kann es bevorzugt sein, dass der Infrarotemitter die Probekammer und nicht die Referenzkammer bestrahlt und wobei zwischen der Probekammer und Referenzkammer ein Verbindungskanal vorliegt, in welchem sich ein Schalldetektor befindet. Diese Ausführungsform zeichnet sich durch eine besonders präzise photoakustische Spektroskopie aus, da beispielsweise Schall von unerwünschten Schallquellen bei der Messung und/oder der Auswertung der Messung herausgerechnet bzw. nicht mitgemessen wird. Vorzugsweise können Probenvolumen und ein Referenzvolumen im Wesentlichen gleiche Abmessungen aufweisen, um eine genaue differentielle Messmethode zu realisieren.

In dem Probenvolumen und Referenzvolumen kann sich das gleiche Gasgemisch befinden. Es kann ebenso bevorzugt sein, dass Probevolumen und Referenzvolumen unterschiedliche Gasgemische umfassen, wobei im Referenzvolumen ein Gasgemisch mit bekannten Eigenschaften vorliegt und im Probenvolumen ein zu analysierendes Gasgemisch vorliegt. Durch die Verwendung zweier Volumina und mindestens eines Schalldruckdetektors kann vorteilhafterweise eine verbesserte Eliminierung von Fehlerquellen, z. B. unerwünschten Schallwellen erfolgen, weil diese auf beide Volumina wirken und der zwischen den Volumina angeordnete Schalldruckdetektor bevorzugt im Wesentlichen nur die durch die für die photoakustische Spektroskopie relevanten von der IR-Strahlung hervorgerufenen Schalldruckwellen im Probenvolumen als Differenzsignal zwischen Probenvolumen und Referenzvolumen detektiert.

Die ein- oder mehrteilige Messzelle kann bevorzugt zum IR-Emitter eine separate Komponente darstellen.

In bevorzugten Ausführungsformen kann die Messzelle in MEMS ausgeführt mit dem IR-Emitter verbunden vorliegen.

Beispielsweise kann die Messzelle, bevorzugt umfassend einen Schalldetektor selbst in MEMS aus einem mehrlagigen Substrat gebildet werden. So können Probenkammer, Referenzkammer und Verbindungskanal aus einem oder mehreren Wafern bereitgestellt werden. Hierzu können entsprechende Kavitäten geätzt werden und im Falle mehrere Wafer entsprechend durch Bonding zu einer Messzelle verbunden werden, welche bevorzugt ebenfalls mittels Bonding mit dem IR-Emitter zu einem Wafer-Stack verbunden werden kann.

Auch ein Schalldruckdetektor kann bevorzugt in MEMS-Technologie bereitgestellt werden, sodass dieser innerhalb der Messzelle integriert vorliegen kann.

Ein MEMS-Schalldruckdetektor bzw. MEMS-Sensor bezeichnet insbesondere ein Sensor in Form eines Mikrosystems (engl. *Micro-Electro-Mechanical System,* kurz MEMS). Ein Mikrosystem ist insbesondere ein miniaturisiertes Gerät, eine Baugruppe und/oder ein Bauteil, wobei die Komponenten Abmessungen der Größenordnung von etwa 1 Mikrometer (µm) oder kleiner haben und als System zusammenwirken. Der MEMS-Sensor ist z. B. ein MEMS-Mikrofon oder eine MEMS-Biegebalken.

In einer bevorzugten Ausführungsform ist der Schalldruckdetektor bevorzugt ein kapazitiv oder optisch auslesbaren, piezoelektrischen, piezoresistiven und/oder magnetischen Balken und/oder ein kapazitives, piezoelektrischen, piezoresistives und/oder optisches Mikrofon.

Die Schalldruckwellen, welche durch die photoakustische Spektroskopie erzeugt werden, können vorzugsweise auf verschiedene Arten detektiert werden. Dabei ist ein Schalldruckdetektor ein besonders gut geeignetes Mittel. Wie obig erläutert kann dieser im Falle einer einteiligen Messzelle bevorzugt innerhalb selbiger angeordnet sein. Im Falle einer zweiteiligen Messzelle umfassend Probenkammer und Referenzkammer, kann es bevorzugt sein, einen Schalldruckdetektor in einem Verbindungskanal zu installieren.

Der Schalldruckdetektor kann beispielsweise ein piezoelektrischer Balken sein. Ein piezoelektrischer Balken ist vorzugweise eine schwingfähige Struktur, insbesondere in Form eines Biegebalkens, welcher ein piezoelektrisches Material, z. B. in Form eines Aktuators umfasst.

Dabei kann es bevorzugt sein, dass der Biegebalken passiv ist, das bedeutet bevorzugt, dass er durch die Schalldruckwellen zu einer Schwingung veranlasst wird. Diese erzeugen dabei wiederum durch die Verformung des piezoelektrischen Materials eine Spannung, welche auf dem piezoelektrischen Effekt beruht. Der (direkte) piezoelektrische Effekt beschreibt bevorzugt das Auftreten einer elektrischen Spannung und/oder eine Änderung der Impedanz an einem aus entsprechendem Material gefertigten Festkörper, wenn er elastisch verformt wird. Die Spannung kann z. B. durch geeignete Kontaktierung abgegriffen und durch eine entsprechende elektronische Schaltung ausgelesen werden.

Es kann ebenso bevorzugt sein, dass der Biegebalken aktiv ist, das bedeutet insbesondere, dass er aufgrund des inversen piezoelektrischen Effekts zu einer Schwingung veranlasst wird. Der piezoelektrische Effekt beschreibt bevorzugt die Verformung eines Materials bei Anlegen einer elektrischen Spannung und/oder eines elektrischen Feldes, wodurch insbesondere durch das Material eine Kraft ausgeübt werden kann. Durch die Schalldruckwellen kann dabei bevorzugt eine Variation der Dämpfung des schwingenden Balkens verursacht werden, welche messbar ist, z. B. durch eine Änderung der Resonanzfrequenz des schwingenden Balkens.

Ein passiv aufgrund von Schalldruckwellen schwingender Balken kann bevorzugt ebenso ausgelesen werden, z. B. durch kapazitive, magnetische und/oder piezoresistive Methoden. Die Idee dabei ist bevorzugt ebenfalls, dass durch die Schwingung eine elektrisch auslesbare Veränderung erzeugt wird, z. B. basierend auf einem sich ändernden magnetischen Fluss durch einen mitschwingenden Magneten, durch eine sich ändernde Kapazität zwischen einer schwingenden und einer feststehenden Elektrode und/oder durch einen sich ändernden elektrischen Widerstand in einem piezoresistiven Material.

Ein Mikrofon umfasst vorzugsweise eine schwingfähig gelagerte Membran, welche durch Schalldruckwellen zu Schwingungen angeregt wird, welche wiederum elektrisch auslesbar ist, ähnlich dem vorstehend beschriebenen Balken. Dabei können ebenfalls kapazitive, piezoelektrische und/oder piezoresistive Messmethoden der Schwingungsauslegung zur Anwendung kommen.

Bevorzugt kann ebenso ein optisches Mikrofon zur Anwendung kommen, wobei dieses Schwingungen vorzugsweise durch Reflektion z. B. eines Laserstrahls auf der Membran in ein optisches Signal umwandelt, welches z. B. in einer interferometrischen Anordnung ausgelesen wird.

In einer weiteren bevorzugten Ausführungsform der Erfindung ist der MEMS-Schalldruckdetektor bzw. MEMS-Sensor ein kapazitives Mikrofon, umfassend eine MEMS-Membran als Elektrode sowie eine Gegenelektrode und wobei die MEMS-Membran bevorzugt eine maximale Ausdehnung in mindestens eine Richtung aufweist von 100 µm bis 1500 µm, insbesondere 200 bis 1000 µm. Diese Ausführungsform stellt eine gute Verbindung aus Kompaktheit und Empfindlichkeit des Sensors dar.

In einer weiteren bevorzugten Ausführungsform der Erfindung ist der MEMS-Sensor ein Durchflusssensor, bevorzugt ein thermischer Durchflusssensor, ein Hitzedraht-Anemometer, ein thermoelektrisches Anemometer und/oder ein resistives Anemometer.

Anstelle eines Schalldruckdetektors können durch Druckunterschiede entstehende Gasflüsse beispielsweise in einem Verbindungskanal auch durch einen Durchflusssensor detektiert werden. Ein Durchflusssensor ist bevorzugt ein Sensor, welcher den Durchfluss eines Gases durch einen Kanal, ein Rohr und/oder ein Röhrchen messen kann. Dieses ist vorzugsweise der Verbindungskanal. Bei dieser Ausführungsform ist insbesondere bevorzugt, dass eine Apertur zwischen Probenkammer und Referenzkammer vorliegt, damit ein Durchfluss im Verbindungskanal stattfindet, welcher messbar ist.

Ein thermischer Durchflusssensor beruht bevorzugt auf dem Prinzip, dass die Wärme eines beheizten Elementes, z. B. eines Heizdrahts, in Abhängigkeit von der Strömungsgeschwindigkeit eines Gases entzogen wird. Der Fachmann weiß, wie er somit aus der messbaren Strömungsgeschwindigkeit auf die bei einer PAS erzeugten Schalldruckvariationen und schließlich auf eine Gaskonzentration schließen kann.

Ein Anemometer bezeichnet bevorzugt eine Vorrichtung zur lokalen Messung der Geschwindigkeit eines Strömungsfeldes eines Fluides.

Ein Hitzedraht-Anemometer wird vorzugsweise eine stromdurchflossene Sensorfläche und/oder ein Draht als Sonde verwendet und elektrisch erwärmt. Die verwendeten Materialien haben bevorzugt einen temperaturabhängigen Widerstand, welcher sich insbesondere mit steigender Temperatur erhöht. Die elektrisch zugeführte Wärmeleistung wird von der Strömung des Fluides in Abhängigkeit von dessen Geschwindigkeit teilweise als Wärmeverlustleistung abtransportiert. Es kann vorzugsweise der Heiz-Strom konstant gehalten und der Spannungsabfall am Widerstand gemessen werden. Die gemessene Spannung ist dann vorzugsweise proportional zur Temperatur der Sonde, wobei mit steigender Strömungsgeschwindigkeit sich die Sonde weiter abkühlt und sich die gemessene Spannung bevorzugt verringert.

Es kann ebenso vorzugsweise die Temperatur konstant gehalten werden, wobei der Strom zum Heizen je nach Abkühlung durch das strömende Gas variiert.

Es kann ebenso bevorzugt ein thermoelektrisches Anemometer und/oder ein resistives Anemometer zum Einsatz kommen. Auch ein Ultraschallanemometer kann geeignet sein. Hierbei werden Ultraschallwellen vom Gas, in dem sie sich ausbreiten, mitgeführt, sodass die Laufzeit von Signalen über eine Messstrecke fester Länge von der Durchströmung der Messstrecke abhängt. Bevorzugt entspricht die Länge des Verbindungskanals der Messstrecke zwischen Ultraschallgeber und einem Ultraschallsensor, sodass präzise der Durchfluss zwischen Proben- und Referenzkammer bestimmbar ist.

Vorzugsweise kann auch eine Thermosäule zum Einsatz kommen. Dies ist vorzugsweise ein elektrisches Bauelement, durch das thermische Energie in elektrische Energie umgewandelt werden kann. Die Thermosäule kann z. B. bei der Verwendung eines Hitzedraht-Anemometers, welches bei konstanter Temperatur gehalten werden soll, Verwendung finden.

Aufgrund der bevorzugt fehlenden mechanischen Komponenten sind MEMS-Sensoren dieser Ausführungsform als Schalldruckdetektoren besonders einfach und kompakt herstellbar und dabei sehr robust.

Besonders bevorzugt kann unter Verwendung eines MEMS-Sensors neben dem IR-Emitter somit das gesamte Spektrometer in MEMS realisiert sein. Dabei kann vorteilhafterweise der Sensor direkt im MEMs realisiert bzw. integriert sein.

Zur Verbindung der Messzelle umfassend den MEMS-Sensor mit dem IR-Emitter kann bevorzugt ein Bonding wie obig beschrieben eingesetzt werden.

Mittels dieser Schritte wird ein überaus kompakter Aufbau mit einem mehrlagigen Substrat sowohl für IR-Emitter, Messzelle als auch Schalldetektor auf integrierte Bauweise erreicht. Dieser kann dabei auch stark miniaturisiert sein, wobei in der Herstellung auf bewährte Herstellungsverfahren der Halbleiter und/oder MEMS-Herstellung zurückgegriffen werden kann.

In einem weiteren Aspekt betrifft die Erfindung gemäß Anspruch 13 ein Verfahren zur Analyse mehrerer Gaskomponenten eines Gasgemisches umfassend
a. Bereitstellung eines beschriebenen photoakustischen Spektrometers
b. Steuerung des Mikro-Heizelementes und des MEMS Fabry-Pérot-Interferometer zur Bestrahlung der mit dem Gasgemisch befüllten Messzelle mit einer zeit- und wellenlängenabhängig modulierten Infrarotstrahlung, wobei die Messzelle mit einer vorgegeben Zeitabhängigkeit mit zwei oder mehr Wellenlängen bestrahlt wird, um zwei oder mehr Gaskomponenten mit der vorgegeben Zeitabhängigkeit anzuregen
c. Messung der zeitabhängigen Ausbildung von Schalldruckwellen in dem Gasgemisch
d. Bestimmung der Präsenz und/oder Konzentration der zwei oder mehr Gaskomponenten in dem Gasgemisch anhand der gemessenen Schalldruckwellen

Der durchschnittliche Fachmann erkennt, dass technische Merkmale, Definitionen und Vorteile bevorzugter Ausführungsformen des erfindungsgemäßen photoakustischen Spektrometers auch für das erfindungsgemäße Verfahren zur Analyse von Gas gelten.

Insbesondere erlaubt die Steuerung des Mikro-Heizelementes und des MEMS Fabry-Pérot-Interferometer mittels der beschriebenen Steuereinheit eine zeit- und wellenlängenabhängig modulierten Infrarotstrahlung, wobei die Messzelle mit einer vorgegeben Zeitabhängigkeit mit zwei oder mehr Wellenlängen bestrahlt wird, um zwei oder mehr Gaskomponenten mit der vorgegeben Zeitabhängigkeit anzuregen.

Je nach Anwendungsfall lässt sich mittels eines Fabry-Pörot-Interferometer ein gewünschter spektraler Bereich zur Anregung einer Gaskomponente selektieren. Beispielsweise kann zu einem ersten Zeitpunkt eine erste Wellenlänge für CO2 Beispielsweise ist für die Anregung von CO₂ Molekülen ein Spektralbereich von etwa 4,3 Mikrometern (µm) geeignet, während eine zweite Wellenlänge ungefähr 3,4 µm betragen kann, um beispielsweise Methan zu detektieren.

Besonders bevorzugt lässt sich das erfindungsgemäße Verfahren beispielsweise für die Brennwertanalyse von Erdgas einsetzen. Hierzu lässt sich, wie beschrieben, schnell und präzise der Anteil verschiedener Gaskomponenten des Gasgemisches Brenngas bestimmen.

Natürliches (rohes) Erdgas ist in der Regel ein kohlenwasserstoff-haltiges Gasgemisch, dessen chemische Zusammensetzung je nach Fundstätte beträchtlich schwanken kann.

Hauptbestandteil ist meist Methan. Dessen Anteil liegt in vielen Erdgaslagerstätten zwischen 75 und 99 Mol-%. Das Rohgas kann jedoch auch erhöhte Anteile an Ethan (1 % bis 15 %), Propan (1 % bis 10 %), Butan, Ethen und Pentanen enthalten und wird in den Fällen oft als nasses Erdgas benannt.

Weitere Nebenbestandteile von Rohgas können Schwefelwasserstoff, Stickstoff (und Kohlenstoffdioxid oder Edelgase sein.

Schwefelwasserstoff, Kohlenstoffdioxid und Wasser müssen mit Verfahren wie der Gaswäsche (u. a. speziell der Entschwefelung) zunächst abgetrennt werden, da sie zum Teil giftig sind, zu Umweltschadstoffen (beispielsweise Schwefeldioxid) verbrennen, korrosiv wirken oder stärker als Methan zu Hydratbildung neigen.

Mittels des beschrieben kompakten photoakustischen Spektrometers lässt sich vorteilhaft somit besonders preisgünstig und dezentral eine Überwachung der vorgenannten Komponenten durchführen, um die weiteren Aufbereitungsschritte des Erdgases darauf abzustimmen.

Die Analyse eines Erdgases kann hierbei unmittelbar bei der Produktion vom Bohrloch erfolgen, sich jedoch auch nach den Schritten derAufbereitungen über die Leitungen bis hin zum Abnehmer erstrecken.

Die gewonnenen Informationen können u.a. sowohl zur Optimierung der Aufbereitung als auch Abrechnungszwecken genutzt werden.

Anstelle Pauschalpreise für Erdgase mit unterschiedlichem Brennwert veranschlagen zu müssen, kann vielmehr basierend auf einer gleichzeitigen Analyse mehrere Gaskomponenten eine brennwertgenaue Abrechnung erfolgen.

Vorteilhaft gewährleistet das erfindungsgemäße Spektrometer auf kostengünstige Weise derart genaue Analysen auch komplexerer Gasgemische mit mehreren Gaskomponenten.

Neben der vorgenannten beispielhaften Verwendung zur Analyse von Erdgas kann das Spektrometer selbstverständlich ebenfalls u.a. für präzisere Analyse der Luftqualität, Produktionsgasen oder Schadstoffemission eingesetzt. Die erfindungsgemäße Möglichkeit der Analyse mehrere Gaskomponenten mit einem kompakten photoakustischen Spektroskop bietet somit auf unterschiedlichsten Gebieten technische und wirtschaftliche Vorteile.

### Detaillierte Beschreibung

Im Folgenden soll die Erfindung an Hand von Beispielen und Figuren näher erläutert werden, ohne auf diese beschränkt zu sein.

### Kurzbeschreibung der Abbildungen

- **Figur 1**: Schematische Illustration einer beispielhaften Analyse mehrere Gaskomponenten in einem Gasgemisch unter erfindungsgemäßer Verwendung eines Fabry-Pérot-Interferometers
- **Figur 2**: Schematische Illustration einer weiteren beispielhaften Analyse mehrerer Gaskomponenten in einem Gasgemisch unter erfindungsgemäßer Verwendung eines Fabry-Pörot-Interferometers
- **Figur 3**: Schematische Illustration einer bevorzugten Ausführungsform eines IR-Emitters in welchem eine MEMS Fabry-Pérot auf einem Mikro-Heizelement monolithisch integriert vorliegt.
- **Figur 4**: Schematische Illustration des Schichtaufbaus eines bevorzugten IR-Emitters

### Detaillierte Beschreibung der Abbildung

Figur 1 zeigt eine schematische Illustration einer beispielhaften Analyse mehrere Gaskomponenten in einem Gasgemisch unter erfindungsgemäßer Verwendung eines Fabry-Pérot-Interferometers 3, welches eine zeit- und wellenlängenabhängige Modulation der Infrarotstrahlung eines IR-Emitter 1 erlaubt.

Wie in der Fig. 1a) illustriert, ist es hierdurch vorteilhaft möglich mehrere Gaskomponenten eines Gasgemisches zeitlich aufgelöst mit nur einem Detektor zu analysieren. Zu diesem Zweck kann bevorzugt die Transmission des MEMS Fabry-Pörot-Interferometer so gesteuert werden, dass zu einem ersten Zeitpunkt eine erste Wellenlänge bzw. ein erster Wellenlängenbereich transmittiert wird (T1, λ_{trans,1}), während zu einem zweiten Zeitpunkt eine zweite Wellenlänge bzw. ein zweiter Wellenlängenbereich transmittiert wird (T2, λ_{trans,2}) und zu einem dritten Zeitpunkt eine dritte Wellenlänge bzw. ein dritter Wellenlängenbereich transmittiert wird (T3, λ_{trans,3}).

Je nach Anwendungsfall lässt sich mittels des Fabry-Pörot-Interferometer somit ein gewünschter spektraler Bereich (λ_{trans,1}, λ_{trans,2} oder λ_{trans,3}) auf das Absorptionsspektrum jeweiliger Gaskomponenten abstimmen und so selektiv zu einem Zeitpunkt innerhalb einer Messzelle **5** nur selektiv eine gewünschten Gaskomponente zur Ausbildung von Schallwellen anregen. Hierdurch ist es möglich mittels desselben IR-Emitter **1** zu unterschiedlichen Zeiten (T1, T2, T3) unterschiedliche Gaskomponenten (Gaskomponenten 1, 2, 3) eines Gasgemisches zu detektieren.

Die zeit- und wellenlängenabhängige Modulation der Transmissionseigenschaften des MEMS Fabry-Pérot-Interferometers **3** kann bevorzugt durch eine Veränderung des Abstandes d zweier planplanarer Spiegel **19** erfolgen. Bevorzugt kann zu diesem Zweck ein elektrostatischer MEMS-Aktuator (nicht illustriert) eingesetzt werden. Mittels Anlegen entsprechend zeitabhängiger Steuerspannungen kann über einen elektrostatischen Aktuator der Abstand der beiden Spiegel und somit die Transmissionseigenschaften des Fabry-Pörot-Interferometer schnell und präzise eingestellt werden, um auf diese Weise flexibel Anregungsschemata zu definieren, welche eine Multi-Gaskomponenten-Analyse erlauben.

Bevorzugt kann es hierbei auch zur überlagerten Modulation mittels des Fabry-Pérot-Interferometers **3** und einer elektrischen Ansteuerung des Mikro-Heizelementes kommen. Beispielsweise kann es bevorzugt sein, dass die Intensität der IR-Strahlung, welche vom Heizelement emittiert wird, durch Variation einer Stromzufuhr zum Heizelement moduliert wird und zusätzlich eine Modulation der selektierten Wellenlänge mittels des Fabry-Pérot-Interferometers **3** erfolgt.

Durch die Steuerung kann beispielsweise eine periodische Bestrahlung mit zwei oder mehr Wellenlängen erfolgen kann, welche eine unterschiedliche Periodizität, Amplitude oder Phase aufweisen. Besonders bevorzugt kann eine Anregung mit periodischen Signalen verschiedener Wellenlänge erfolgen, wobei die periodischen Signale für die jeweilige Wellenlänge gegeneinander phasenverschoben vorliegen (vgl. Fig. 1b).

Durch den Phasenversatz erfolgt zu unterschiedlich Zeitpunkten eine maximale Anregung einer jeweiligen Gaskomponente mit entsprechender Wellenlänge. Dieser Phasenversatz ist vorteilhaft auch bei einer zeitabhängigen Detektion der resultierenden Schallwellen feststellbar, sodass die Schallsignale zuverlässig den jeweiligen Gaskomponenten zugeordnet werden können.

Wie in Figur 2 illustriert, ist bevorzugt ebenso eine unmittelbare Modulation des Anregungssignals ausschließlich mit Hilfe des MEMS Fabry-Pérot-Interferometers **3,** ohne überlagerte elektrische Ansteuerung des Mikro-Heizelementes möglich. Beispielsweise kann zu diesem Zweck die Strahlung des IR-Emitters **1** als eine Sprungfunktion ausgeführt werden, bei welcher die Transmissionseigenschaft des MEMS Fabry-Pörot-Interferometer **3** in einer Rechteckfunktion zwischen verschiedenen Wellenlängen geführt wird (vgl. (λ_{trans,1}, λ_{trans,2}, λ_{trans,3}, Fig. 2, moduliertes Eingangssignal). Bei Bestrahlung des Gasgemisches mit einer derart wellenlängen- und zeitabhängig modulierten IR-Strahlung erfolgt vorteilhaft eine modulierte Anregung, welche Rückschlüsse über den Anteil der einzelnen Gaskomponenten erlaubt. So hängen die zeitabhängigen Amplituden der erzeugten akustischen Signale (moduliertes Ausgangssignal, Fig. 2) von dem Anteil bzw. der jeweiligen Konzentration der Gaskomponenten ab, welche bei den jeweiligen Wellenlängen (λₜᵣₐₙₛ,_{1,} λₜᵣₐₙₛ,₂ oder λₜᵣₐₙₛ,₃) maximal angeregt werden. Durch zeitliche Auflösung der detektierten akustischen Signale mittels eines Schalldetektors (z.B. Mikrofon) kann auf diese Weise eine Multi-Gaskomponenten-Analyse schnell und zuverlässig durchgeführt werden. Durch Verzicht auf eine elektrische Modulation des IR-Emitters werden besonders hohe Modulationsfrequenzen erreicht, sodass eine Vielzahl von Gaskomponenten gleichzeitig überwacht oder analysiert werden kann.

Figur 3 zeigt eine schematische Illustration einer bevorzugten Ausführungsform eines IR-Emitters **1,** in welchem ein MEMS Fabry-Pérot-Interferometer **3** auf einem Mikro-Heizelement **7** monolithisch integriert vorliegt.

In der gezeigten Ausführungsform umfasst der Infrarot-Emitter **1** einen Deckel-Wafer **9** umfassend MEMS Fabry-Pérot-Interferometer **3** und ein Device-Wafer **11** umfassend ein Mikro-Heizelement **7**

Mittels des Mikro-Heizelementes **7** wird eine breitbandige Infrarotstrahlung erzeugt, welche durch ein oberhalb im Deckel-Wafer **9** befindliches MEMS Fabry-Pérot-Interferometer **3** moduliert werden kann. Zu diesem Zweck kann bevorzugt ein elektrostatischer MEMS-Aktuator vorgesehen sein. Beispielsweise kann ein erster Spiegel **19** fixiert vorliegen und ein zweiter Spiegel **19** über eine Feder oder eine gespannte Membrane aufgehangen sein, um eine Rückstellkraft bereitzustellen. Einer oder beide Spiegel **19** liegen bevorzugt direkt oder in direkt mit Elektroden **17** verbunden vor, sodass durch Anlegen einer Spannung zwischen den Elektroden eine elektrostatische Aktuierung **17** erfolgt. Mittels Anlegen entsprechend zeitabhängiger Steuerspannungen kann über einen derartigen elektrostatischen Aktuator der Abstand **d** der beiden Spiegel **19** und somit die Transmissionseigenschaften des Fabry-Pérot-Interferometer **3** schnell und präzise eingestellt werden.

Das Mikro-Heizelement **7** wird auf dem Device-Wafer **11** definiert. Hierzu können kann beispielsweise ein Ätzen des Substrats, Abscheiden eines leitfähigen Materials auf dem Substrat, Strukturierung des leitfähigen Materials zu einer erhitzbaren Schicht und Kontaktierung des leitfähigen Materials erfolgen. Beim Ätzen kann der Device-Wafer **11** als Rohling in die gewünschte Grundform des Mikro-Heizelements **7** gebracht werden. Beispielsweise kann eine dünnflächige Substratschicht geätzt werden, welche über dünne Stege **15** mit dem verbleibenden Device-Wafer **11** verbunden ist (vgl. Fig. 3C). Dies stellt eine geringe thermische Trägheit sicher und ermöglicht eine schnelle Modulation der Temperatur bzw. Infrarotemission durch das Mikro-Heizelement **11.**

Das MEMS Fabry-Pörot-Interferometer **3** umfassend zwei planparallele Spiegel **19** kann bevorzugt innerhalb des Deckel-Wafers **9** definiert werden. Hierzu können wie obig beschrieben vorzugsweise Methoden der Volumen-Mikromechanik oder Oberflächen-Mikromechanik zum Einsatz kommen.

Unter dem unteren Spiegel **19** wird das Substrat des Deckel-Wafers **9** ebenfalls entfernt, um eine Kavität zu schaffen unter der sich nach dem Bonden von Deckel-Wafer **9** und Device-Wafer **11** das Mikro-Heizelement **7** befindet (vgl. Fig. 3A).

Vorteilhaft liegen in der Ausführungsform Fabry-Pérot-Interferometer **3** und Mikroheizelement **7** wohl definiert und kompakt integriert auf einem Wafer-Stack vor, sodass eine aufwändige Justage vermieden werden kann. Mittels der Ausführungsform kann somit ein äußerst kompakter IR-Emitter **1** bereitgestellt werden, welcher schnell und präzise eine zeit- und wellenlängenabhängige Modulation der IR-Strahlung und somit eine Multi-Gaskomponenten-Analyse mittels eines miniaturisierten photoakustischen Spektrometers erlaubt.

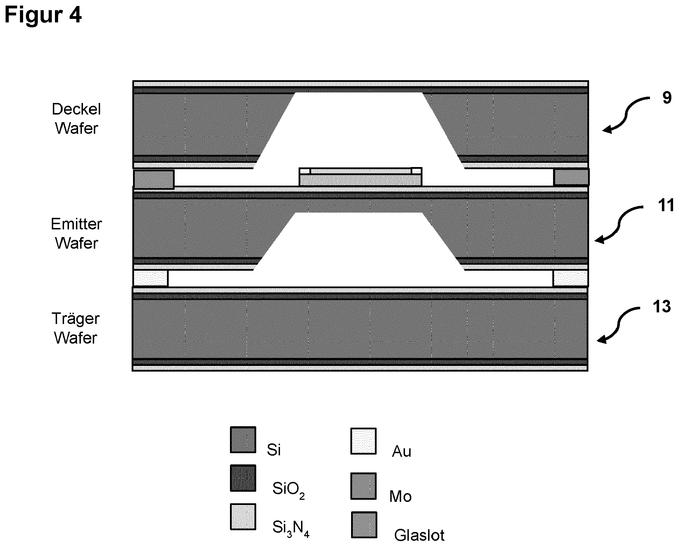

Figur 4 zeigt eine schematische Illustration eines beispielhaften Schichtaufbaus und Materialwahl Figur 4 zeigt eine schematische Illustration eines beispielhaften Schichtaufbaus und Materialwahl für eine bevorzugte Ausführungsform eines IR-Emitters, in welchem MEMS Fabry-Pérot-Interferometer **3** und eine Mikro-Heizelement **7** integriert vorliegen.

Der Deckel-Wafer **9** basiert auf Silizium in welches mittels KOH eine Kavität geätzt wird.

Vorteilhaft ist Silizium transparent im Infrarotbereich, sodass keine negative Beeinflussung des IR-Emitters erfolgt. Das Mikro-Heizelement **7** wird auf dem Device-Wafer **11** (oder Emitter-Wafer **11**) definiert. Glaslot Bond kann über Zuleitungen, Vakuum bzw. Unterdruck erfolgen. Ein Träger-Wafer **13** aus beispielsweise Silizium ist nicht zwangsläufig notwendig. Ein Fusion-Bond müsste vor einer Au Abscheidung erfolgen

Eine Herstellung kann beispielsweise mittels folgender Schritte erfolgen:
Für einen Basis bzw. Device-Wafer **11** erfolgt a) eine Abscheidung einer Oxid-Nitrid-Membran, b) ein Ätzen der Membran mittels beispielsweise KOH, c) ein Abscheiden und Strukturieren des Heizer-Materials zur Bereitstellung eines Mikro-Heizelementes **7** und d) eine Passivierung des Mikro-Heizelementes **7**
Zur Integration des Fabry-Pörot-Interferometers **3** kann bevorzugt eine Silicon-on-Insulator (SOI) Prozess genutzt werden. Hierbei kann a) als Deckel-Wafer **9** ein SOI Wafer bereitgestellt werden, b) eine erste Membran von der Rückseite geätzt, c) eine obere zweite Membran strukturiert und d) ein Freistellen durch Ätzen des BOX (*burried oxide*) beispielsweise mittels Flusssäure (HF) durchgeführt werden

Ein Bonden des Basis- bzw. Device-Wafers **7** mit dem SOI bzw. Deckel-Wafer 9 kann beispielsweise mittels Glas-Frit-Bonden erfolgen. Zur Verbindung mit einem optionaler Träger Wafer kann ein anodisches Bonden genutzt werden.

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Das erfindungsgemäße Spektrometer, sowie Verfahren unter dessen Verwendung beschränken sich in ihren Ausführungen somit nicht auf die vorstehenden bevorzugten Ausführungsformen. Vielmehr ist eine Vielzahl von Ausgestaltungsvarianten denkbar, welche von der dargestellten Lösung abweichen können.

Die Ansprüche definieren den Schutzumfang der Erfindung. Der Schutzumfang der Ansprüche ist darauf gerichtet, das erfindungsgemäßen photoakustische Spektrometer dessen Verwendung in einem Verfahren zur Analyse mehrerer Gaskomponenten sowie äquivalente Ausführungsformen von diesen abzudecken.

### Bezugszeichenliste

- 1: IR-Emitter
- 3: Fabry-Pérot-Interferometer
- 5: Messzelle
- 7: Mikro-Heizelement
- 9: Deckel-Wafer
- 11: Device-Wafer
- 13: Träger-Wafer
- 15: Steg
- 17: Elektrode
- 19: Spiegel

### LITERATURVERZEICHNIS

Ebermann, M. Neumann N., Hiller K., Seifert M., Meinig M., Kurt S. Tunable MEMS Fabry-Pérot filters for infrared microspectrometers: A review, Proc. of SPIE Vol. 9760 97600H-1 (2016).

## Patentansprüche

1. Photoakustisches Spektrometer zur Analyse mehrerer Gaskomponenten eines Gasgemisches, umfassend
- einen Infrarot-Emitter (1) umfassend ein Mikro-Heizelement (7)
- eine mit dem Gasgemisch befüllbare Messzelle (5) und
- einen Schalldruckdetektor,
wobei die Messzelle (5) im Strahlengang des Infrarot-Emitters (1) vorliegt, sodass die von dem Infrarot-Emitter (1) emittierbare Infrarotstrahlung Gas in der Messzelle (5) zur Ausbildung von Schalldruckwellen anregen kann, welche mit Hilfe des Schalldruckdetektors messbar sind wobei
der Infrarot-Emitter (1) ein MEMS Fabry-Pérot-Interferometer (3) umfasst, welches auf dem Mikro-Heizelement (7) monolithisch integriert vorliegt und mit welchem eine zeit- und wellenlängenabhängige Modulation der Infrarotstrahlung ermöglicht wird
**dadurch gekennzeichnet, dass**
der Infrarot-Emitter (1) mindestens zwei Substratlagen umfasst und durch Bonden mindestens zweier Wafer (9, 11) gebildet wird, wobei ein Deckel-Wafer (9) das MEMS Fabry-Pérot-Interferometer (3) und ein Device-Wafer (11) das Mikro-Heizelement (7) umfasst und
wobei der Deckel-Wafer (9) eine Kavität aufweist unter der sich nach dem Bonden von Deckel-Wafer (9) und Device-Wafer (11) das auf dem Device-Wafer (11) definierte Mikro-Heizelement (7) befindet.

2. Photoakustisches Spektrometer gemäß dem vorherigen Anspruch
**dadurch gekennzeichnet, dass**
das Spektrometer eine Steuereinheit umfasst, welche konfiguriert ist, eine Transmission des MEMS Fabry-Pérot-Interferometer (3) derart zu steuern, dass die Messzelle (5) mindestens zu einem ersten Zeitpunkt mit einer ersten Wellenlänge und zu einem zweiten Zeitpunkt mit einer zweiten Wellenlänge bestrahlt wird, sodass zum ersten Zeitpunkt eine erste Gaskomponente und zum zweiten Zeitpunkt eine zweite Gaskomponente des Gasgemisches zur Ausbildung von Schalldruckwellen angeregt wird.

3. Photoakustisches Spektrometer gemäß einem der vorherigen Ansprüche
**dadurch gekennzeichnet, dass**
das Spektrometer eine Steuereinheit umfasst, welche konfiguriert ist, eine Transmission des MEMS Fabry-Pérot-Interferometer (3) derart zu steuern, dass die Messzelle (5) mit einer vorgegebenen Zeitabhängigkeit mit zwei oder mehr Wellenlängen bestrahlt wird, um zwei oder mehr Gaskomponenten mit der vorgegebenen Zeitabhängigkeit anzuregen.

4. Photoakustisches Spektrometer gemäß einem der vorherigen Ansprüche
**dadurch gekennzeichnet, dass**
die vorgegebene Zeitabhängigkeit einer periodischen Bestrahlung entspricht, wobei die periodische Bestrahlung mit zwei oder mehr unterschiedlichen Wellenlängen jeweils eine unterschiedliche Periodizität, Amplitude und/oder Phase aufweisen.

5. Photoakustisches Spektrometer gemäß einem der vorherigen Ansprüche
**dadurch gekennzeichnet, dass**
das Spektrometer eine Steuereinheit umfasst, welche konfiguriert ist zur Regulation der Temperatur des Mikro-Heizelements (7) in einem Bereich zwischen 50 °C und 1000 °C, bevorzugt zwischen 100 °C und 1000 °C.

6. Photoakustisches Spektrometer gemäß einem der vorherigen Ansprüche
**dadurch gekennzeichnet, dass**
das Spektrometer eine Steuereinheit umfasst, welche konfiguriert ist zur Regulation der Temperatur des Mikro-Heizelements (7), sodass das Mikro-Heizelement (7) eine breitbandige Infrarotstrahlung mit einer spektralen Breite von mindestens 500 nm, bevorzugt mindestens 1000 nm emittiert.

7. Photoakustisches Spektrometer gemäß einem der vorherigen Ansprüche
**dadurch gekennzeichnet, dass**
das MEMS Fabry-Pörot-Interferometer (3) zwei teildurchlässige Spiegel (19) umfasst, welche einen optischen Resonator bilden und deren Abstand und/oder Orientierung mittels eines MEMS-Aktuators zur Einstellung eine wellenlängenspezifische Transmission veränderbar ist.

8. Photoakustisches Spektrometer gemäß Anspruch 7
**dadurch gekennzeichnet, dass**
der MEMS-Aktuator ausgewählt ist aus der Gruppe umfassend elektrostatischer Aktuator, piezoelektrischer Aktuator, elektromagnetischer Aktuator und/oder thermischer Aktuator.

9. Photoakustisches Spektrometer gemäß einem der vorherigen Ansprüche
**dadurch gekennzeichnet, dass**
das Mikro-Heizelement (7) ein Substrat umfasst, auf welchem mindestens teilweise eine erhitzbare Schicht aus einem leitfähigen Material aufgebracht ist, an welchem Kontakte für eine Strom- und/oder Spannungsquelle vorliegen.

10. Photoakustisches Spektrometer gemäß dem vorherigen Anspruch
**dadurch gekennzeichnet, dass**
das Substrat bevorzugt ausgewählt ist aus einer Gruppe umfassend Silizium, monokristallines Silizium, Polysilizium, Siliziumdioxid, Siliziumcarbid, Silizium-Germanium, Siliziumnitrid, Nitrid, Germanium, Kohlenstoff, Galliumarsenid, Galliumnitrid und/oder Indiumphosphid und/oder
das leitfähige Material zur Bildung der erhitzbaren Schicht bevorzugt ausgewählt ist aus einer Gruppe umfassend Platin, Wolfram, (dotiertes) Zinnoxid, monokristallines Silizium, Polysilizium, Molybdän, Titan, Tantal, Titan-Wolfram Legierung, Metallsilizid, Aluminium, Graphit und/oder Kupfer.

11. Photoakustisches Spektrometer gemäß einem der vorherigen Ansprüche
**dadurch gekennzeichnet, dass**
die Messkammer (5) ein offenes System darstellt, welches eine oder mehrere Öffnungen aufweist, sodass ein zu analysierendes Gas in die Messkammer (5) einströmen oder diffundieren kann.

12. Photoakustisches Spektrometer gemäß einem der vorherigen Ansprüche
**dadurch gekennzeichnet, dass**
der Schalldruckdetektor ein MEMS-Sensor ist, bevorzugt ein Mikrofon, ein Durchflusssensor und/oder eine Schwingungsbalken.

13. Verfahren zur Analyse mehrerer Gaskomponenten eines Gasgemisches umfassend
a. Bereitstellung eines photoakustischen Spektrometers gemäß einem der vorherigen Ansprüche
b. Steuerung des Mikro-Heizelementes (7) und des MEMS Fabry-Pérot-Interferometer (3) zur Bestrahlung der mit dem Gasgemisch befüllten Messzelle (5) mit einer zeit- und wellenlängenabhängig modulierten Infrarotstrahlung, wobei die Messzelle (5) mit einer vorgegeben Zeitabhängigkeit mit zwei oder mehr Wellenlängen bestrahlt wird, um zwei oder mehr Gaskomponenten mit der vorgegeben Zeitabhängigkeit anzuregen
c. Messung der zeitabhängigen Ausbildung von Schalldruckwellen in dem Gasgemisch
d. Bestimmung der Präsenz und/oder Konzentration der zwei oder mehr Gaskomponenten in dem Gasgemisch anhand der gemessenen Schalldruckwellen

## Claims

1. A photoacoustic spectrometer for analyzing a plurality of gas components of a gas mixture, comprising
an infrared emitter (1) comprising a micro-heating element (7) a measuring cell (5) that can be filled with the gas mixture,
and
a sound pressure detector,
wherein the measuring cell (5) is in the beam path of the infrared emitter (1), so that the infrared radiation that can be emitted by the infrared emitter (1) can stimulate gas in the measuring cell (5) to form sound pressure waves which can be measured using the sound pressure detector, wherein
the infrared emitter (1) comprises a MEMS Fabry-Pérot interferometer (3) which is monolithically integrated on the micro-heating element (7) and enabling a time- and wavelength-dependent modulation of the infrared radiation,
**characterized in that**
the infrared emitter (1) comprises at least two substrate layers and is formed by bonding at least two wafers (9, 11), wherein a cover wafer (9) comprises the MEMS Fabry-Pérot interferometer (3) and a device wafer (11) comprises the micro-heating element (7) and wherein the cover wafer (9) has a cavity under which the micro-heating element (7) defined on the device wafer (11) is located after the cover wafer (9) and device wafer (11) have been bonded.

2. The photoacoustic spectrometer according to the preceding claim,
**characterized in that**
the spectrometer comprises a control unit which is configured to control a transmission of the MEMS Fabry-Pérot interferometer (3) such that the measuring cell (5) is irradiated at least at a first point in time with a first wavelength and at a second point in time with a second wavelength, so that at the first time a first gas component and at the second time a second gas component of the gas mixture is excited to form sound pressure waves.

3. The photoacoustic spectrometer according to any one of the preceding claims,
**characterized in that**
the spectrometer comprises a control unit which is configured to control a transmission of the MEMS Fabry-Pérot interferometer (3) such that the measuring cell (5) is irradiated with two or more wavelengths at a predetermined time dependency in order to excite two or more gas components at the predetermined time dependency.

4. The photoacoustic spectrometer according to any one of the preceding claims,
**characterized in that**
the predetermined time dependency corresponds to a periodic irradiation, wherein the periodic irradiation with two or more different wavelengths each has a different periodicity, amplitude, and/or phase.

5. The photoacoustic spectrometer according to any one of the preceding claims,
**characterized in that**
the spectrometer comprises a control unit which is configured to regulate the temperature of the micro-heating element (7) in a range between 50 °C and 1000 °C, preferably between 100 °C and 1000 °C.

6. The photoacoustic spectrometer according to any one of the preceding claims,
**characterized in that**
the spectrometer comprises a control unit which is configured to regulate the temperature of the micro-heating element (7) so that the micro-heating element (7) emits broadband infrared radiation with a spectral width of at least 500 nm, preferably at least 1000 nm.

7. The photoacoustic spectrometer according to any one of the preceding claims,
**characterized in that**
the MEMS Fabry-Pérot interferometer (3) comprises two semitransparent mirrors (19) which form an optical resonator and the distance and/or orientation of which can be changed by means of a MEMS actuator for setting a wavelength-specific transmission.

8. The photoacoustic spectrometer according to claim 7,
**characterized in that**
the MEMS actuator is selected from the group comprising electrostatic actuators, piezoelectric actuators, electromagnetic actuators, and/or thermal actuators.

9. The photoacoustic spectrometer according to any one of the preceding claims,
**characterized in that**
the micro-heating element (7) comprises a substrate onto which at least partially a heatable layer of a conductive material is applied, which material comprises contacts for a current and/or voltage source.

10. The photoacoustic spectrometer according to the preceding claim,
**characterized in that**
the substrate is preferably selected from a group comprising silicon, monocrystalline silicon, polysilicon, silicon dioxide, silicon carbide, silicon germanium, silicon nitride, nitride, germanium, carbon, gallium arsenide, gallium nitride and/or indium phosphide, and/or
the conductive material for forming the heatable layer is selected from the group comprising platinum, tungsten, (doped) tin oxide, monocrystalline silicon, polysilicon, molybdenum, titanium, tantalum, titanium-tungsten alloy, metal silicide, aluminum, graphite, and/or copper.

11. The photoacoustic spectrometer according to any one of the preceding claims,
**characterized in that**
the measuring chamber (5) represents an open system which has one or more openings so that a gas to be analyzed can flow or diffuse into the measuring chamber (5).

12. The photoacoustic spectrometer according to any one of the preceding claims,
**characterized in that**
the sound pressure detector is a MEMS sensor, preferably a microphone, a flow sensor, and/or a vibrating beam.

13. A method for analyzing a plurality of gas components of a gas mixture, comprising
a. providing a photoacoustic spectroscope according to any one of the preceding claims
b. controlling the micro-heating element (7) and the MEMS Fabry-Pérot interferometer (3) for irradiating the measuring cell (5) filled with the gas mixture with infrared radiation that is modulated in a time- and wavelength-dependent manner, wherein the measuring cell (5) is irradiated with two or more wavelengths at a predetermined time dependency to excite two or more gas components with at given time dependency
c. measuring the time-dependent formation of sound pressure waves in the gas mixture
d. determining the presence and/or concentration of the two or more gas components in the gas mixture based on the measured sound pressure waves

## Revendications

1. Spectromètre photoacoustique pour l'analyse de plusieurs composants gazeux d'un mélange gazeux, comprenant
- un émetteur infrarouge (1) comprenant un micro-élément chauffant (7)
- une cellule de mesure (5) qui peut être remplie du mélange gazeux et
- un détecteur de pression acoustique,
dans lequel la cellule de mesure (5) se trouve dans le trajet du faisceau de l'émetteur infrarouge (1), de sorte que le rayonnement infrarouge pouvant être émis par l'émetteur infrarouge (1) peut stimuler le gaz dans la cellule de mesure (5) pour former des ondes de pression acoustique, qui peuvent être mesurées à l'aide du détecteur de pression acoustique, dans lequel
l'émetteur infrarouge (1) comprend un interféromètre MEMS Fabry-Pérot (3) intégré de manière monolithique sur le micro-élément chauffant (7) et permettant une modulation du rayonnement infrarouge en fonction du temps et de la longueur d'onde
**caractérisé en ce que**
l'émetteur infrarouge (1) comprend au moins deux couches de substrat et est formé par collage d'au moins deux plaquettes (9, 11), dans lequel une plaquette de couverture (9) comprend l'interféromètre MEMS Fabry-Pérot (3) et une plaquette de dispositif (11) comprend le micro-élément chauffant (7) et dans lequel la plaquette de couverture (9) comporte une cavité sous laquelle, après le collage de la plaquette de couverture (9) et de la plaquette de dispositif (11), se trouve le micro-élément chauffant (7) défini sur la plaquette de dispositif (11).

2. Spectromètre photoacoustique selon la revendication précédente
**caractérisé en ce que**
le spectromètre comprend une unité de commande qui est configurée pour commander une transmission de l'interféromètre MEMS Fabry-Pérot (3) de sorte que la cellule de mesure (5) est irradiée au moins à un premier instant avec une première longueur d'onde et à un second instant avec une seconde longueur d'onde, de sorte qu'au premier instant, un premier composant gazeux, et au second instant, un second composant gazeux du mélange gazeux sont excités pour former des ondes de pression acoustique.

3. Spectromètre photoacoustique selon l'une quelconque des revendications précédentes
**caractérisé en ce que**
le spectromètre comprend une unité de commande qui est configurée pour commander une transmission de l'interféromètre MEMS Fabry-Pérot (3) de sorte que la cellule de mesure (5) est irradiée avec une dépendance temporelle prédéterminée avec deux longueurs d'onde ou plus afin d'exciter deux composants gazeux ou plus avec la dépendance temporelle prédéterminée.

4. Spectromètre photoacoustique selon l'une quelconque des revendications précédentes
**caractérisé en ce que**
la dépendance temporelle prédéterminée correspond à une irradiation périodique, dans lequel l'irradiation périodique comporte, avec deux longueurs d'onde différentes ou plus, à chaque fois une périodicité, une amplitude et/ou une phase différente.

5. Spectromètre photoacoustique selon l'une quelconque des revendications précédentes
**caractérisé en ce que**
le spectromètre comprend une unité de commande configurée pour réguler la température du micro-élément chauffant (7) dans une plage comprise entre 50 °C et 1 000 °C, de préférence entre 100 °C et 1 000 °C.

6. Spectromètre photoacoustique selon l'une quelconque des revendications précédentes
**caractérisé en ce que**
le spectromètre comprend une unité de commande configurée pour réguler la température du micro-élément chauffant (7) de sorte que le micro-élément chauffant (7) émet un rayonnement infrarouge à large bande à raison d'une largeur spectrale d'au moins 500 nm, de préférence d'au moins 1 000 nm.

7. Spectromètre photoacoustique selon l'une quelconque des revendications précédentes
**caractérisé en ce que**
l'interféromètre MEMS Fabry-Pérot (3) comprend deux miroirs partiellement transparents (19) qui forment un résonateur optique et dont la distance et/ou l'orientation peuvent être modifiées au moyen d'un actionneur MEMS pour régler une transmission spécifique à la longueur d'onde.

8. Spectromètre photoacoustique selon la revendication 7
**caractérisé en ce que**
l'actionneur MEMS est choisi dans le groupe comprenant un actionneur électrostatique, un actionneur piézoélectrique, un actionneur électromagnétique et/ou un actionneur thermique.

9. Spectromètre photoacoustique selon l'une quelconque des revendications précédentes
**caractérisé en ce que**
le micro-élément chauffant (7) comprend un substrat sur lequel est appliquée au moins partiellement une couche chauffante en un matériau conducteur, sur lequel se trouvent des contacts pour une source de courant et/ou de tension.

10. Spectromètre photoacoustique selon la revendication précédente
**caractérisé en ce que**
le substrat est de préférence choisi dans un groupe comprenant le silicium, le silicium monocristallin, le polysilicium, le dioxyde de silicium, le carbure de silicium, le silicium-germanium, le nitrure de silicium, le nitrure, le germanium, le carbone, l'arséniure de gallium, le nitrure de gallium et/ou le phosphure d'indium et/ou
le matériau conducteur pour former la couche chauffante est de préférence choisi dans un groupe comprenant le platine, le tungstène, l'oxyde d'étain (dopé), le silicium monocristallin, le polysilicium, le molybdène, le titane, le tantale, l'alliage titane-tungstène, le siliciure métallique, l'aluminium, le graphite et/ou le cuivre.

11. Spectromètre photoacoustique selon l'une quelconque des revendications précédentes
**caractérisé en ce que**
la chambre de mesure (5) représente un système ouvert qui comporte une ou plusieurs ouvertures de sorte qu'un gaz à analyser peut s'écouler ou se diffuser dans la chambre de mesure (5) .

12. Spectromètre photoacoustique selon l'une quelconque des revendications précédentes
**caractérisé en ce que**
le détecteur de pression acoustique est un capteur MEMS, de préférence un microphone, un capteur de débit et/ou une poutre vibrante.

13. Procédé d'analyse d'une pluralité de composants gazeux d'un mélange gazeux comprenant
a. la fourniture d'un spectromètre photoacoustique selon l'une quelconque des revendications précédentes
b. la commande du micro-élément chauffant (7) et de l'interféromètre MEMS Fabry-Pérot (3) pour irradier la cellule de mesure (5) remplie du mélange gazeux avec un rayonnement infrarouge modulé en fonction du temps et de la longueur d'onde, dans lequel la cellule de mesure (5) est irradiée avec une dépendance temporelle prédéterminée avec deux longueurs d'onde ou plus pour exciter deux composants gazeux ou plus avec la dépendance temporelle donnée
c. la mesure de la formation en fonction du temps d'ondes de pression acoustique dans le mélange gazeux
d. la détermination de la présence et/ou de la concentration de deux composants gazeux ou plus dans le mélange gazeux sur la base des ondes de pression acoustique mesurées.
